Europäisches Patentamt

(19) European Patent Office

Office européen des brevets

(11) Numéro de publication: **0 063 057**
**B1**

(12) **FASCICULE DE BREVET EUROPEEN**

(45) Date de publication du fascicule du brevet:
08.10.86

(51) Int. Cl.⁴: **G 01 B 11/275**

(21) Numéro de dépôt: **82400003.8**

(22) Date de dépôt: **05.01.82**

(54) Procédé pour mesurer le parallélisme des roues des trains avant et arrière de véhicules automobiles ainsi que les angles de set-back entre les roues du train avant et l'angle de crabe, et appareillage pour la mise en oeuvre de ce procédé.

(30) Priorité: **20.01.81 FR 8100944**

(43) Date de publication de la demande:
**20.10.82 Bulletin 82/42**

(45) Mention de la délivrance du brevet:
**08.10.86 Bulletin 86/41**

(84) Etats contractants désignés:
**AT BE CH DE GB IT LI LU NL SE**

(56) Documents cités:
**WO - A - 81/00909**
**WO - A - 81/01047**
**FR - A - 2 343 221**
**FR - A - 2 382 675**
**FR - A - 2 451 020**
**US - A - 4 126 943**
**US - A - 4 239 389**

(73) Titulaire: **Etablissements M. Muller & Cie, 50-56, rue des Tournelles, F-75140 Paris Cedex 03 (FR)**

(72) Inventeur: **Coetsier, Paul André, 22, Avenue Alphonse Lint, F-77400 Lagny (FR)**

(74) Mandataire: **Tony-Durand, Serge, Cabinet Tony-Durand 22, Boulevard Voltaire, F-75011 Paris (FR)**

## Description

La présente invention a pour objet un procédé pour mesurer le parallélisme des roues des trains avant et arrière de véhicules automobiles, les angles de «set-back» entre les roues du train avant, l'angle du véhicule ainsi que d'autres paramètres angulaires utiles pour le contrôle du véhicule.

Complémentairement l'invention a aussi pour objet un appareillage pour la mise en œuvre de ce procédé.

On connait différents procédés et appareillages pour contrôler les angles de pincement ou d'ouverture des roues avant et arrière d'un véhicule, notamment des appareils dans lesquels il est prévu un jeu de plusieurs projecteurs de lumière destinés à envoyer des faisceaux lumineux transversalement au véhicule devant les roues avant, et des faisceaux longitudinaux parallèles aux roues avant du véhicule, et qui sont réfléchis sur des miroirs placés au niveau des roues arrière.

Ainsi le brevet US-A-4 126 943 (HUNTER) décrit un appareil de contrôle permettant le réglage des roues avant et arrière en fonction de l'axe de symétrie du véhicule. Cet appareil comprend deux ensembles de projection et de réception de rayons lumineux, qui sont destinés à être rapportés sur les roues avant ou arrière du véhicule. Dans chacun de ces ensembles, il est prévu un projecteur oscillant continuellement dans un plan horizontal sous l'effet d'une came entrainée par un moteur, un potentiomètre relié à cette came enregistrant les différents angles mesurés. En combinaison avec ces deux ensembles l'appareil comprend deux rétroréflecteurs également susceptibles d'être rapportés contre les roues avant ou arrière du véhicule.

Avec un tel appareil l'opérateur doit commencer par disposer les deux ensembles de projection et de réception sur les roues arrière pour que ceux-ci émettent deux faisceaux dirigés longitudinalement vers l'avant afin qu'ils soient réfléchis par les rétroréflecteurs placés sur les roues avant, ces faisceaux frappant alors des cellules réceptrices prévues sur les ensembles capteurs, ce qui détermine le parallélisme arrière ainsi que sa répartition par rapport à l'axe de symétrie du véhicule. Mais, l'opérateur doit ensuite démonter les ensembles de projection et réception pour les placer sur les roues avant, les rétroréflecteurs étant eux-mêmes alors placés sur les roues arrière.

Ainsi, l'appareil et le procédé décrits dans ce brevet nécessitant un certain nombre d'opérations et ne permettent pas d'obtenir un affichage en continu des valeurs mesurées.

Le brevet français FR-A-2 343 221 décrit un appareillage comportant deux ensembles de projection destinés à être rapportés contre les seules roues avant et qui sont capables d'émettre chacun deux faisceaux lumineux perpendiculaires, l'un transversal et l'autre longitudinal, au moyen d'un miroir de renvoi, un miroir réfléchissant étant placé sur la roue arrière correspondante. Le système de projection prévu dans chaque ensemble est monté sur une tourelle mobile reliée à un potentiomètre.

L'utilisateur d'un tel appareil doit alors procéder à deux visées «manuelles» sur chaque ensemble de projection, et enfoncer une touche permettant la mémorisation des tensions correspondantes. En conséquence, bien qu'il ne nécessite pas un déplacement des ensembles de projection, cet appareil reste peu pratique à utiliser.

Le brevet US-A-4 239 389 décrit un appareil comportant deux bras destinés à être fixés contre les roues avant d'un véhicule et sur chacun desquels est montée une paire de projecteurs émettant des faisceaux perpendiculaires, dirigés l'un vers la roue avant et l'autre vers des rétroréflecteurs et des miroirs fixés à la roue arrière, le pinceau lumineux étant réfléchi sur un capteur placé sur la roue avant.

Les deux faisceaux issus de chacun des émetteurs exécutent un balayage constant, grâce à la rotation de cames, couplées à des moteurs. Les projecteurs sont reliés à des potentiomètres qui repèrent pour quelle valeur angulaire de projection les cellules se trouvent frappées par les rayons lumineux.

Le fait que les projecteurs lumineux, aussi bien dans la direction transversale que dans la direction longitudinale doivent exécuter des balayages constants, nécessite des mécanismes d'entrainement et de commande qui sont relativement coûteux et dont la présence constitue un facteur défavorable pour la fiabilité de l'appareil. Par ailleurs, celui-ci ne permet pas de lire en continu les différents angles relevés par l'appareil.

Quant au brevet français FR-A-2 451 030, il a pour objet un procédé dans lequel on utilise, au niveau de chaque roue avant un émetteur de rayons laser, délivrant deux rayons laser transversalement et longitudinalement au véhicule. Ces rayons laser effectuent un balayage dans des plans perpendiculaires à leurs axes et les récepteurs prévus consistent en des barrettes de diodes dont chacune est susceptible de recevoir les rayons laser correspondants.

Il convient alors de relever, sur chaque récepteur associé à un émetteur laser, la distance entre le point d'impact du rayon laser et un zéro de référence, ces valeurs étant ensuite introduites dans un calculateur qui détermine les angles de pincement ou d'ouvertures des roues avant et arrière ainsi que le set-back.

Ce procédé et l'appareil correspondant ont l'avantage de permettre une lecture en continu des valeurs relevées. Cependant, ils ont pour inconvénient de nécessiter l'emploi de rayons laser et de barrettes de diodes, ce qui entraine un prix de revient élevé de l'appareil et constitue également un facteur défavorable pour la fiabilité de celui-ci.

L'invention a donc pour but de proposer un procédé et un appareillage de mise en œuvre de ce procédé, qui ne présentent pas les inconvénients des réalisations connues, et qui permettent d'exécuter de façon rapide et précise une série de mesures angulaires relatives aux trains avant et arrière ainsi qu'à d'autres paramètres d'un véhicule, avec un coût de revient modéré.

A cet effet, l'invention a pour objet un procédé pour mesurer le parallélisme des roues des trains avant et arrière de véhicules automobiles en fonction de l'axe de poussée du véhicule, c'est-à-dire la bissectrice de l'angle formé par les plans verticaux médians des roues arrière de celui-ci, ainsi que l'angle de «set-back» entre les roues du train avant, en rapportant sur chaque roue avant un bras sensiblement horizontal portant d'une part des moyens pour matérialiser une droite de référence reliant deux points fixes situés sur les bras correspondants, et d'autre part un émetteur d'un pinceau lumineux parallèle au plan de la roue avant correspondante et dirigé vers la roue arrière située du même côté, sur laquelle est adapté un miroir de réflexion du pinceau lumineux correspondant sur une cellule photosensible montée sur le bras porté par la roue avant respective, caractérisé en ce que l'on manœuvre la direction du véhicule pour la placer au point de centre de celle-ci, on mesure successivement, pour chaque roue avant, les angles $\alpha_1$ et $\alpha_2$ pour les roues droite et gauche, respectivement, entre la droite de référence précitée et la perpendiculaire au bras associé à la roue correspondante, tracée à partir du point fixe correspondant, et ce dans une position dite «0» du train avant telle que celui-ci se trouve à son point de centre, afin de mesurer $\alpha 10$ et $\alpha 20$ respectivement pour la roue avant droite et la roue avant gauche dans ladite position «0», puis on braque la direction dans une position dite «1», telle que le pinceau lumineux avant gauche vienne frapper la cellule avant gauche tandis que le pinceau lumineux avant droit est réfléchi au-delà de la cellule correspondante afin de mesurer $\alpha 11$ et $\alpha 21$ respectivement pour la roue avant droite et la roue avant gauche, dans ladite position «1» puis, après braquage de la direction dans une position dite «2» inverse de la précédente, pour laquelle le pinceau lumineux avant droite vienne frapper la cellule correspondante tandis que le pinceau lumineux avant gauche vient frapper un point situé au-delà de la cellule de la roue avant gauche, on mesure $\alpha 12$ et $\alpha 22$ respectivement pour la roue avant droite et la roue avant gauche dans ladite position «2», puis à partir des quatre angles ainsi relevés, on détermine géométriquement et on calcule successivement:

$\delta 10$ = angle de parallélisme avant droit en fonction de l'axe de poussée, lorsque la direction est centrée, cet angle de parallélisme, positif s'il correspond à un pincement et négatif s'il correspond à une ouverture, étant l'angle entre la droite perpendiculaire au plan vertical contenant le faisceau lumineux tracé à partir d'un point fixe et la perpendiculaire à l'axe de poussée, également tracée à partir du même point fixe;

$\delta 20$ = angle de parallélisme avant gauche en fonction de l'axe de poussée, lorsque la direction est centrée, cet angle étant similaire au précédent, mais pour le côté gauche;

$\delta 13$ = angle de parallélisme avant droit lorsque le parallélisme avant est également réparti par rapport à l'axe de poussée;

$\delta 23$ = angle de parallélisme avant gauche lorsque le parallélisme avant est également réparti par rapport à l'axe de poussé.

b = l'angle de «set-back» dynamique, c'est-à-dire l'angle ayant pour sommet le centre de chaque roue avant et pour côtés, d'une part la droite joignant les centres des roues avant, et d'autre part la perpendiculaire à l'axe de poussée tracée à partir du centre de la roue avant.

$\xi$ = demi-angle de parallélisme du train arrière en fonction de l'axe de poussée, c'est-à-dire l'angle formé, pour chaque roue, par la perpendiculaire à l'axe de poussée, et la perpendiculaire au plan médian de la roue correspondante, ces perpendiculaires étant matérialisées par les plans des miroirs, les valeurs angulaires précitées étant déterminées dans un calculateur électronique par les relations suivantes, établies géométriquement:

$$2\xi = \alpha_{12} + \alpha_{21}$$

$$b = \frac{\alpha_{21} - \alpha_{11} + \alpha_{22} - \alpha_{12}}{4}$$

$$\delta_{13} = \frac{\alpha_{11} + \alpha_{12} + b}{2}$$

$$\delta_{23} = \frac{\alpha_{21} + \alpha_{22}}{} - b$$

$$\delta_{10} = \alpha_{10} + \frac{\alpha_{21} - \alpha_{11} + \alpha_{22} - \alpha_{12}}{4}$$

$$\delta_{20} = \alpha_{20} - \frac{\alpha_{21} - \alpha_{11} + \alpha_{22} - \alpha_{12}}{4}$$

Suivant une autre caractéristique du présent procédé, on détermine en permanence les valeurs du parallélisme individuel $\delta 1$ de la roue avant droite et

$\delta 2$ de la roue avant gauche à différents temps «n», donc les valeurs $\delta 1n$ et $\delta 2n$, suivant les relations:

$$\delta_{1n} = \alpha_{1n} + \frac{\alpha_{21} - \alpha_{11} + \alpha_{22} - \alpha_{12}}{4}$$

$$\delta_{2n} = \alpha_{2n} - \frac{\alpha_{21} - \alpha_{11} + \alpha_{22} - \alpha_{12}}{4}$$

où $\alpha_{1n}$ et $\alpha_{2n}$ correspondent respectivement aux angles $\alpha_1$ et $\alpha_2$ aux temps «n», ces valeurs étant affichées pour pouvoir être visualisées par l'opérateur, qui règle alors le parallélisme des roues avant aux valeurs voulues.

On comprend donc que le procédé selon l'invention permet, uniquement à partir de la mesure des angles entre la droite de référence et la perpendiculaire à chaque bras associé et par application des relations ci-dessus que l'on démontre géométriquement, de mesurer avec précision la série des paramètres précités, c'est-à-dire les angles de parallélisme des roues avant, des roues arrière en fonction de l'axe de poussée, notamment lorsque le train avant est centré par rapport au point de centre de la direction ainsi que lorsqu'il est également réparti par rapport à l'axe de poussée, et l'angle de set-back dynamique.

Tous ces résultats pouvant être visualisés sur un écran, l'opérateur peut les faire varier individuellement afin de régler les paramètres en cause de façon très précise, aux valeurs voulues.

Suivant un mode de réalisation perfectionné du procédé visé par l'invention, on place au-dessus des miroirs portés par les roues arrière, des cellules photosensibles de manière que les distances entre ces cellules et les plans médians des roues correspondantes soient égales, et lors du braquage de gauche à droite ou inversement de droite à gauche du train avant, les pinceaux lumineux viennent frapper les cellules respectives, on définit les paramètres suivants:

$\beta$ = angle de crabe du véhicule, c'est-à-dire l'angle ayant pour côtés, d'une part l'axe de poussée et d'autre part l'axe de symétrie du véhicule,

$\beta1$ = angle de parallélisme avant droit en fonction de l'axe de symétrie,

$\beta2$ = angle de parallélisme avant gauche en fonction de l'axe de symétrie.

$\beta10$ = angle de parallélisme avant droit par rapport à l'axe de symétrie lorsque la direction est centrée,

$\beta20$ = angle de parallélisme avant gauche par rapport à l'axe de symétrie lorsque la direction est centrée,

$\beta13$ = angle de parallélisme dynamique avant droit par rapport à l'axe de symétrie,

$\beta23$ = angle de parallélisme dynamique avant gauche par rapport à l'axe de symétrie,

$\gamma1$ = angle de parallélisme arrière droit en fonction de l'axe de symétrie,

$\gamma2$ = angle de parallélisme arrière gauche en fonction de l'axe de symétrie.

On établit géométriquement et on détermine dans le calculateur électronique les valeurs angulaires des paramètres ci-dessus, puis après affichage visuel de ces valeurs par le calculateur, on exécute un réglage de $\beta1$ et $\beta2$ aux valeurs voulues, les valeurs intermédiaires aux temps «n», $\beta1n$ et $\beta2n$ restant visuellement affichées.

L'appareillage pour la mise en œuvre du procédé précité comprend un bras fixé horizontalement contre chaque roue avant et, sur chaque bras, des moyens comportant un capteur angulaire pour matérialiser une droite de référence reliant deux points fixes situés respectivement sur l'un et l'autre bras, un émetteur d'un pinceau lumineux parallèle au plan de la roue avant correspondante et dirigé vers la roue arrière située du même côté, et un miroir porté par ladite roue arrière pour réfléchir le pinceau lumineux sur une cellule photosensible montée sur le bras correspondant, cet appareil étant caractérisé en ce que les moyens pour matérialiser une droite de référence entre deux points fixes situés sur lesdits bras sont constitués par un fil tendeur dont chaque extrémité est connectée à l'un desdits capteurs, le signal délivré par chaque capteur étant représentatif de la position de ce fil tendeur par rapport à la perpendiculaire au bras correspondant, ces capteurs étant notamment des potentiomètres.

Le procédé et l'appareillage selon l'invention permettent, comme on le voit, de déterminer toute une série de valeurs angulaires intéressantes pour le véhicule et de contrôler celle-ci en fonction des fourchettes de tolérance données pour chaque véhicule, grâce à l'affichage visuel des résultats obtenus par le calculateur, et ce à partir de deux mesures angulaires seulement et au moyen d'un appareillage relativement peu onéreux.

D'autres particularités et avantages de l'invention apparaîtront au cours de la description qui va suivre. Aux dessins annexés on a représenté à titre d'exemples non limitatifs, deux formes de réalisation du procédé et de l'appareillage selon l'invention.

– La figure 1 est une vue en perspective simplifiée des trains avant et arrière d'un véhicule sur lesquels sont accrochés les éléments constitutifs d'une première forme de réalisation de l'appareillage selon l'invention.

– La figure 2 est un schéma géométrique montrant vus de dessus les plans médians verticaux symbolisant les quatres roues du véhicule, le train avant étant braqué de telle manière que le pinceau lumineux avant gauche vienne frapper la cellule avant gauche après réflexion sur le miroir arrière gauche, et que le pinceau lumineux avant droit vienne frapper un point situé au-delà de la cellule avant droite après réflexion sur le miroir arrière droit.

– La figure 3 est un schéma géométrique analogue à la figure 2, mais inversé, le train avant étant cette fois braqué de façon que le pinceau lumineux avant droit vienne frapper la cellule avant droite après réflexion sur le miroir arrière correspondant, tandis que le pinceau lumineux avant gauche vient frapper un point situé au-delà de la cellule avant gauche.

– La figure 4 est un schéma géométrique montrant le train avant positionné de façon que le parallélisme avant soit également réparti par rapport à l'axe de poussée du véhicule, les pinceaux lumineux droit et gauche étant donc réfléchis suivant des angles égaux.

– La figure 5 est un schéma analogue au précédent, mais montrant les trajets des pinceaux lumineux et les angles de parallélisme lorsque la direction est centrée.

– La figure 6 illustre le second mode de réalisation de l'appareillage et du procédé selon l'invention, dans lequel des cellules photosensibles sont positionnées à l'arrière au-dessus des miroirs montés sur les roues arrière, le train avant étant braqué de manière que le pinceau lumineux avant gauche vienne frapper la cellule arrière gauche, et que le pinceau lumineux avant droit vienne frapper un point situé au-delà de la cellule arrière droite.

– La figure 7 est une vue analogue à la figure 6, mais dans laquelle le pinceau lumineux avant droit vient frapper la cellule arrière droite, tandis que le pinceau lumineux avant gauche vient frapper un point situé au-delà de la cellule arrière gauche.

– La figure 8 est une vue en perspective simplifiée analogue à la figure 1, montrant le second mode de réalisation de l'appareillage pour l'exécution du procédé illustré aux figures 6 et 7.

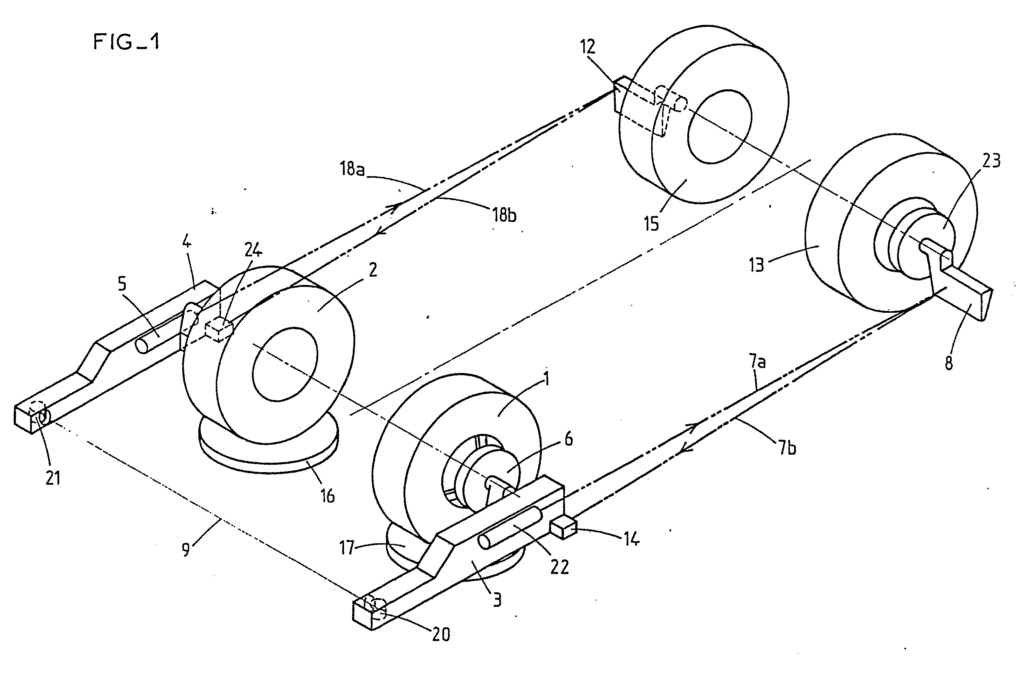

En se reportant à la figure 1, on voit un appareillage destiné à la mise en œuvre d'un procédé selon l'invention, pour mesurer le parallélisme des roues des trains avant et arrière de véhicules automobiles en fonction de l'axe de poussée du véhicule, ainsi que l'angle de «set-back» dynamique entre les roues du train avant.

On sait que l'axe de poussée d'un véhicule est la bissectrice de l'angle formé par les roues arrière de celui-ci; l'angle de set-back dynamique est l'angle dont le sommet est le centre de l'une des roues avant et qui a pour côtés, d'une part la droite joignant les centres des roues avant et d'autre part la perpendiculaire à l'axe de poussée du véhicule, comme on le verra d'ailleurs sur les dessins ci-après.

L'appareillage visé par l'invention comprend un bras (3, 4) fixé latéralement à chaque roue avant respective (1, 2) et sur chaque bras (3, 4) des moyens sont prévus pour matérialiser une droite de référence 9 reliant deux points fixes (20, 21) situés sur les bras (3, 4) respectivement. L'appareillage comprend également, placé sur chaque bras (3, 4), un émetteur (22, 5) respectivement d'un pinceau lumineux (7a, 18a) parallèle au plan de la roue avant correspondante (1, 2), et dirigé vers la roue arrière (13, 15) située du même côté.

Cette dernière porte un miroir (8, 12) de réflexion du pinceau lumineux (7a, 18a), constitué par un trait parallèle au plan médian de la roue avant correspondante sur une cellule photosensible (14, 24) montée sur le bras respectif (3, 4) horizontal.

Les roues avant (1, 2) du véhicule sont amenées sur des plateaux pivotants (16, 17), et les bras (3, 4) sont portés par la jante de la roue associée (1, 2) par l'intermédiaire d'un dispositif d'accrochage (6) connu en soi et qui ne sera donc pas décrit ici.

Les moyens de matérialisation de la droite de référence 9 sont constitués par la combinaison d'un fil tendeur 9 dont les extrémités sont fixées aux parties terminales avant des bras horizontaux (3, 4), et par deux capteurs angulaires (20, 21) portés respectivement par les bras (3, 4). Ces capteurs peuvent être par exemple des potentiomètres, reliés par le fil tendeur 9.

Chaque miroir (8, 12) est placé perpendiculairement au plan de la roue arrière correspondante (13, 15), le trait lumineux réfléchi étant renvoyé en direction de la cellule photosensible (14, 24).

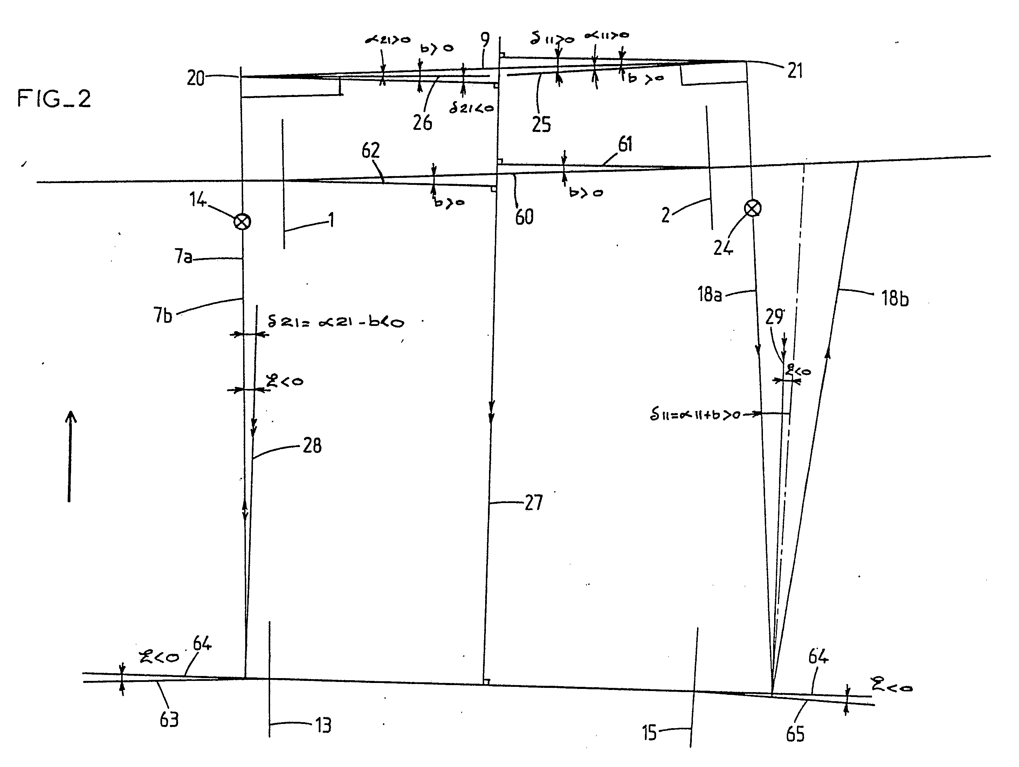

On définira maintenant en référence aux figures 2 à 5; les différents angles pouvant être mesurés au moyen de cet appareillage.

Soient $\alpha_1$ et $\alpha_2$ les angles délivrés respectivement par le capteur avant droit 21 et le capteur avant gauche 20 : $\alpha_{11}$ est l'angle entre la droite de référence 9 et la perpendiculaire 25 aux bras 4 tracée à partir du point fixe correspondant 21, $\alpha_{21}$ étant l'angle entre la droite 9 et la perpendiculaire 26 aux bras 3 tracée à partir du point fixe correspondant 20.

Les angles $\alpha_{11}$ et $\alpha_{21}$ portés sur la figure 2, sont mesurés respectivement par les capteurs 21 et 20, et sont considérés par convention comme positifs lorsque le bras (4, 3) et le tendeur 9 forment un angle obtus, ce qui est le cas sur la figure 2. (Bien entendu, on pourrait adopter une convention contraire).

Le second indice «1» affectant les angles ci-dessus $\alpha_{11}$ et $\alpha_{21}$ est celui des temps, la figure 2 étant considérée comme la situation au temps «1». Au temps «2», les indices deviendront donc «2» etc...

Ainsi, à la figure 2 on se trouve dans une première position du train avant telle que le faisceau lumineux avant gauche (7a, 7b), vient frapper la cellule avant gauche, tandis que le faisceau lumineux avant droit (18a, 18b) est réfléchi au-delà de la cellule correspondante 24, consécutivement à un déplacement angulaire approprié du train avant.

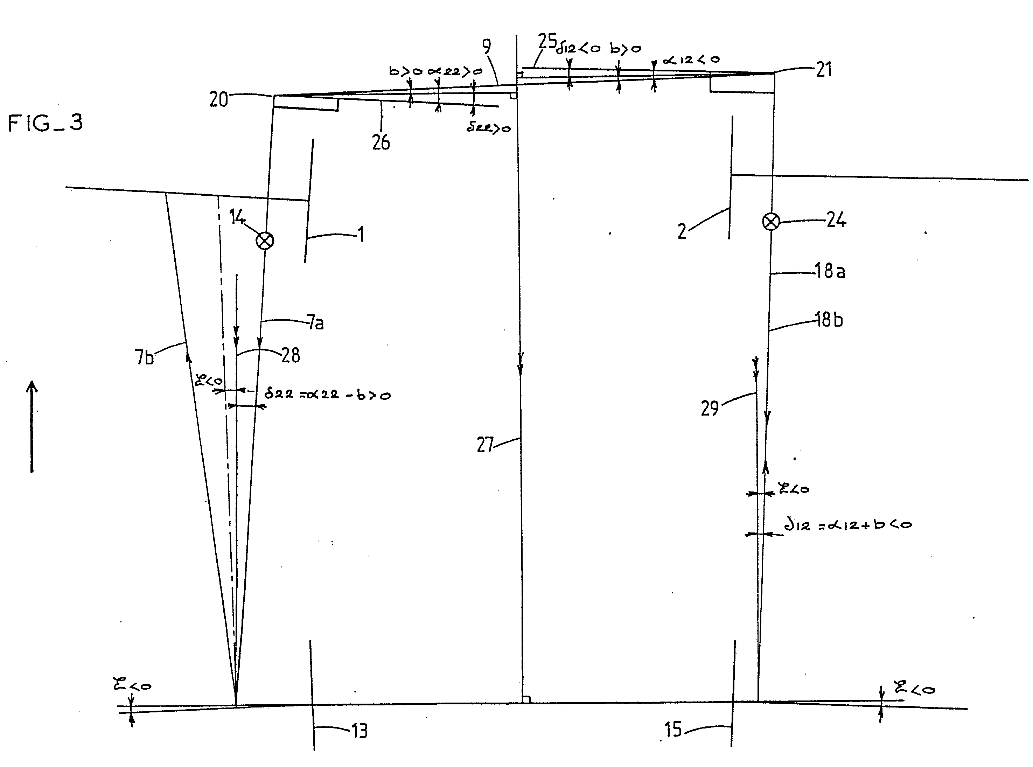

Dans une seconde position angulaire du train avant, illustrée à la figure 3, et inverse de la précédente, le trait lumineux avant droit (18a, 18b) est réfléchi sur la cellule correspondante 24, tandis que le pinceau avant gauche (7a, 7b) vient frapper un point situé au-delà de la cellule 14 de la roue avant gauche 1 après pivotement approprié de celle-ci.

Sur la figure 3, les angles précités deviennent respectivement $\alpha_{12}$ et $\alpha_{22}$, $\alpha_{12}$ étant négatif, $\alpha_{22}$ étant positif.

L'axe de poussée du véhicule est désigné par la référence 27, tandis que les droites 28 et 29 sont des parallèles à l'axe de poussée 27, tracées à partir des points d'impact des traits lumineux (7a, 18a) sur les miroirs correspondants (8, 12).

$\delta_1$ est l'angle de parallélisme avant droit en fonction de l'axe de poussée 27 (positif, s'il correspond à un pincement, négatif s'il correspond à une ouverture de la roue). On voit aux figures 2 et 3 que cet angle $\delta_1$ ($\delta_{11}$ sur la figure 2 et $\delta_{12}$ sur la figure 3), est l'angle entre la droite 25 perpendiculaire au plan vertical contenant le faisceau lumineux 18a tracé à partir du point fixe 21, et la perpendiculaire à l'axe 27 également tracée à partir du point 21.

$\delta_2$ est l'angle de parallélisme avant gauche en fonction de l'axe de poussée 27 (positif s'il correspond à un pincement et négatif s'il correspond à une ouverture).

On voit aux figures 2 et 3 que cet angle $\delta_2$ ($\delta_{21}$ sur la figure 2 et $\delta_{22}$ sur la figure 3) est l'angle entre la droite 26 perpendiculaire au plan vertical contenant le faisceau lumineux 7a, tracée à partir du point fixe 20, et la perpendiculaire à l'axe 27 tracée à partir du point 20.

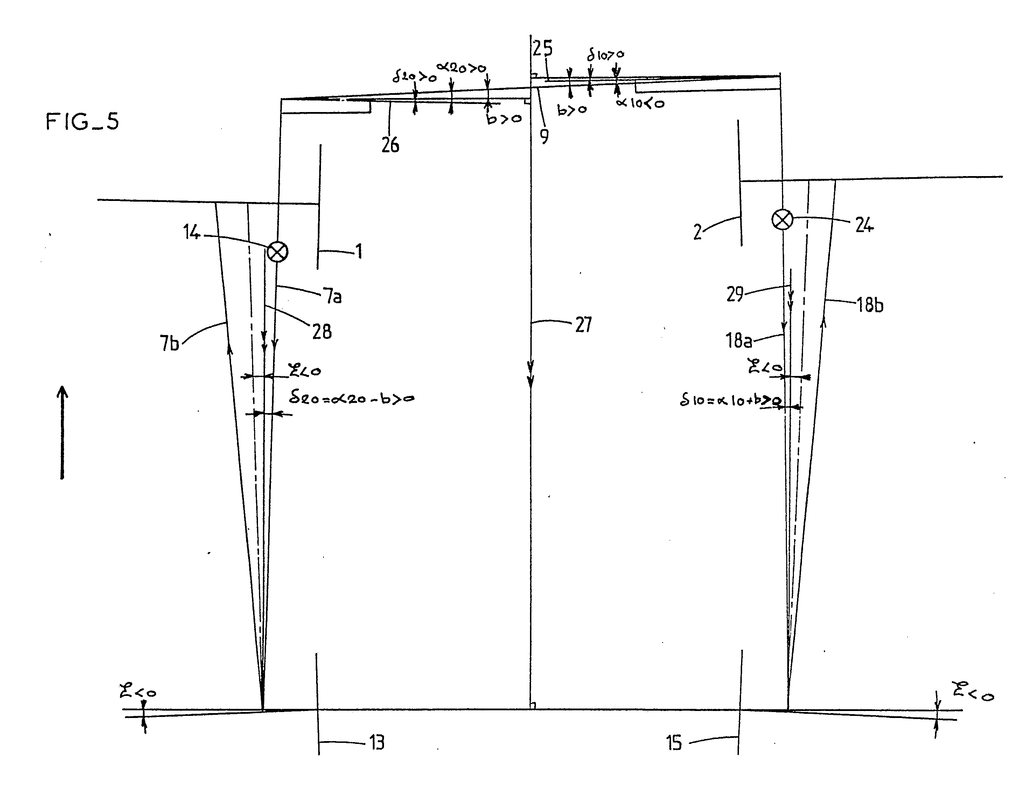

Les seconds indices affectés aux différents angles représentent les temps successifs correspondant aux figures 5, 2 et 3, sur lesquelles ont donc été portés les angles respectifs $\alpha_{10}$ (négatif), $\alpha_{20}$ (positif), $\delta_{10}$ (positif), $\delta_{20}$ (positif), $\alpha_{11}$ (positif), $\alpha_{21}$ (positif), $\delta_{11}$ (positif), $\delta_{21}$ (négatif); $\alpha_{12}$ (négatif), $\alpha_{22}$ (positif), $\delta_{12}$ (négatif) et $\delta_{22}$ (positif).

On voit également sur ces figures que b, angle de set-back dynamique du véhicule, est l'angle ayant pour sommet le centre de chaque roue avant (1, 2) et pour côtés, d'une part la droite 60 (figure 2) joignant les centres des roues avant (1, 2), et d'autre part, la perpendiculaire (61, 62) à l'axe de poussée 27, tracée à partir du centre de la roue avant (2, 1).

Cet angle est positif lorsque la roue avant droite 2 se trouve en avant de la roue avant gauche 1, comme cela est le cas aux figures 2 à 5.

$\xi$ est le demi-angle de parallélisme arrière en fonction de l'axe de poussée 27, c'est-à-dire l'angle formé, pour chaque roue (13, 15), par la perpendiculaire 64 à l'axe 27, et la perpendiculaire (63, 65) au plan médian de la roue correspondante (13, 15), ces perpendiculaires étant matérialisées par les plans des miroirs (8, 12).

Cet angle est négatif aux figures, car les roues arrière sont ouvertes.

Etant donné la faible rotation des roues pour passer successivement aux figures 2, 3 et 4, on peut considérer que l'angle de set-back dynamique b reste pratiquement constant.

Le mode opératoire du procédé selon l'invention consiste essentiellement à relever au moyen des capteurs angulaires (21, 20) les angles $\alpha_1$ et $\alpha_2$ successivement dans la situation de la figure 2 et celle de la figure 3, afin d'obtenir $\alpha_{11}$ et $\alpha_{21}$ dans la première position, puis $\alpha_{12}$ et $\alpha_{22}$ dans la seconde position. A partir des quatre angles ainsi relevés, on détermine géométriquement et on calcule successivement dans un calculateur électronique faisant partie de l'appareillage selon l'invention, mais non représenté:

$\delta_{10}$, $\delta_{20}$, $\delta_{13}$, $\delta_{23}$, b et $\xi$

Toutefois, avant de placer les roues dans les positions illustrées aux figures 2 et 3, l'opérateur place la direction du véhicule au point de centre de celle-ci, ce point de centre étant généralement donné par le constructeur (position des roues de la figure 5), ce qui permet de mesurer $\alpha_{10}$ et $\alpha_{20}$ par les capteurs (21, 20) et de mémoriser ces valeurs dans le calculateur, par conséquent au temps 0.

Puis comme indiqué ci-dessus, l'opérateur braque les roues du véhicule successivement de gauche à droite et inversement, afin de se trouver dans les cas des figures 2 et 3. Sur la figure 2 on voit que le trait lumineux 7b frappe la cellule avant gauche 14. On a donc les équations suivantes:

$\delta_{21} = \alpha_{21} - b = \xi$
$\delta_{11} = \alpha_{11} + b$

Sur la figure 3, on voit que le trait lumineux 18b frappe la cellule avant droite 24, et qu'on a donc les équations:

$\delta_{12} = \alpha_{12} + b = \xi$
$\delta_{22} = \alpha_{22} - b.$

On en déduit le parallélisme total arrière:

$2\xi = \alpha_{12} + \alpha_{21}$

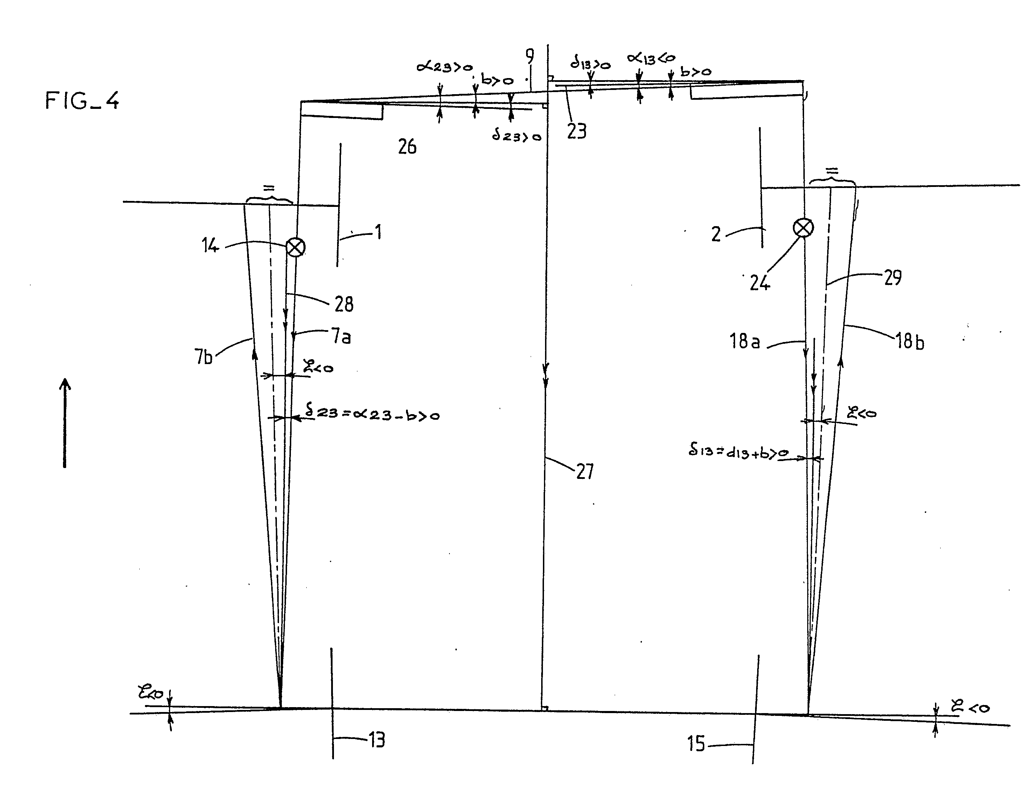

Sur la figure 4, le parallélisme avant est réparti en fonction de l'axe de poussée 27, de sorte qu'on a la relation:

$\delta_{13} = \delta_{23} = \alpha_{13} + b = \alpha_{23} - b$

Le lien reliant les figures 2, 3 et 4 est le suivant:

$\delta_{13} = \dfrac{\delta_{11} + \delta_{12}}{2}$

$\delta_{23} = \dfrac{\delta_{21} + \delta_{22}}{2}$

On obtient ainsi par le calcul, sans passer physiquement par la figure 4, les angles $\delta_{13}$, $\delta_{23}$ et b:

$\delta_{13} = \dfrac{\alpha_{11} + \alpha_{12}}{2} + b$

$\delta_{23} = \dfrac{\alpha_{21} + \alpha_{22}}{2} - b \; (\delta_{13} = \delta_{23})$

$b = \dfrac{\alpha_{21} - \alpha_{11} + \alpha_{22} - \alpha_{12}}{4}$

$\delta_{13} = \delta_{23}$ représente physiquement l'angle individuel de parallélisme dynamique de chacune des roues avant (2, 1), c'est-à-dire lorsque le parallélisme avant est réparti par rapport à l'axe de poussée 27, ce qui correspond au parallélisme réel sur route lorsque le conducteur lâche le volant.

En se reportant à la figure 5, le calculateur peut alors calculer les valeurs du parallélisme individuel $\delta_{10}$ et $\delta_{20}$ des roues avant en fonction de l'axe de poussée 27, lorsque la direction est à son point de centre mécanique.

$\delta_{10} = \alpha_{10} + \dfrac{\alpha_{21} - \alpha_{11} + \alpha_{22} - \alpha_{12}}{4}$

$\delta_{20} = \alpha_{20} - \dfrac{\alpha_{21} - \alpha_{11} + \alpha_{22} - \alpha_{12}}{4}$

Ainsi, pour arriver à ce résultat en partant de la situation de la figure 5, l'opérateur passe successivement par les figures 2 et 3 d'où il tire b, ce qui lui permet de calculer finalement $\delta_{10}$ et $\delta_{20}$.

On voit qu'à la fin de cette seconde phase, l'appareillage peut afficher les résultats suivants:

– $\delta_{10}$, $\delta_{20}$
– $\delta_{13}$, $\delta_{23}$, b
– $2\xi$

Si l'opérateur après contrôle du véhicule, veut effectuer le réglage du parallélisme avant, on voit que le calculateur peut lui donner en permanence les valeurs de parallélisme individuel $\delta_1$ et $\delta_2$ des roues avant pour différents temps «n» successifs, donc les valeurs $\delta_{1n}$ et $\delta_{2n}$ puisque les capteurs 21 et 20 mesurent en permanence $\alpha_{1n}$ et $\alpha_{2n}$:

$\delta_{1n} = \alpha_{1n} + \dfrac{\alpha_{21} - \alpha_{11} + \alpha_{22} - \alpha_{12}}{4}$

$\delta_{2n} = \alpha_{2n} - \dfrac{\alpha_{21} - \alpha_{11} + \alpha_{22} - \alpha_{12}}{4}.$

Ainsi l'opérateur peut régler au fur et à mesure $\delta_{1n}$ et $\delta_{2n}$, grâce à la visualisation de ces angles sur un écran, afin de régler le parallélisme des roues aux valeurs voulues.

Le procédé ci-dessus peut faire l'objet de variantes d'exécution. Ainsi par exemple, on peut afficher la valeur $(\delta_{10} - \delta_{20})$ qui représente l'écart entre les angles de parallélisme des roues avant (2, 1) par rapport à l'axe de poussée 27, lorsque la direction est centrée, ainsi que la valeur

$$\frac{\delta_{10} - \delta_{20}}{2}$$

représentant l'angle entre la bissectrice des roues avant (1, 2) et l'axe de poussée 27 lorsque la direction est centrée.

On peut également appliquer ce procédé pour indiquer à l'opérateur le sens de braquage afin d'obtenir la configuration correspondant au parallélisme dynamique du véhicule, c'est-à-dire l'état correspondant à la figure 4. Cela permet à l'opérateur de connaître la position du volant et du point de centre de la direction lorsqu'il lâche le volant sur route. Pour ce faire, l'appareil indique à l'opérateur le sens de braquage, puis la position exacte satisfaisant aux relations suivantes:

$$\alpha_{13} = \frac{\alpha_{11} + \alpha_{12}}{2}$$

$$\alpha_{23} = \frac{\alpha_{21} + \alpha_{22}}{2}$$

Cette position du volant est celle qui correspond donc à la situation de la figure 4.

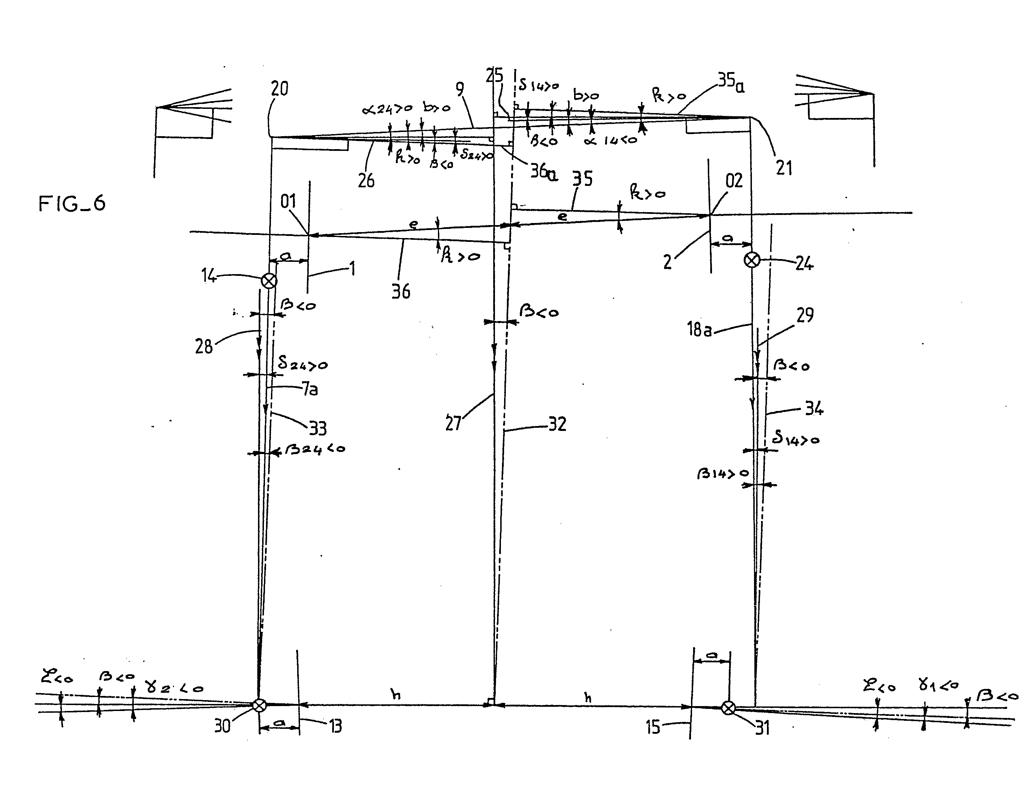

On décrira maintenant en référence aux figures 6 à 8 un second mode de réalisation du procédé et de l'appareillage selon l'invention.

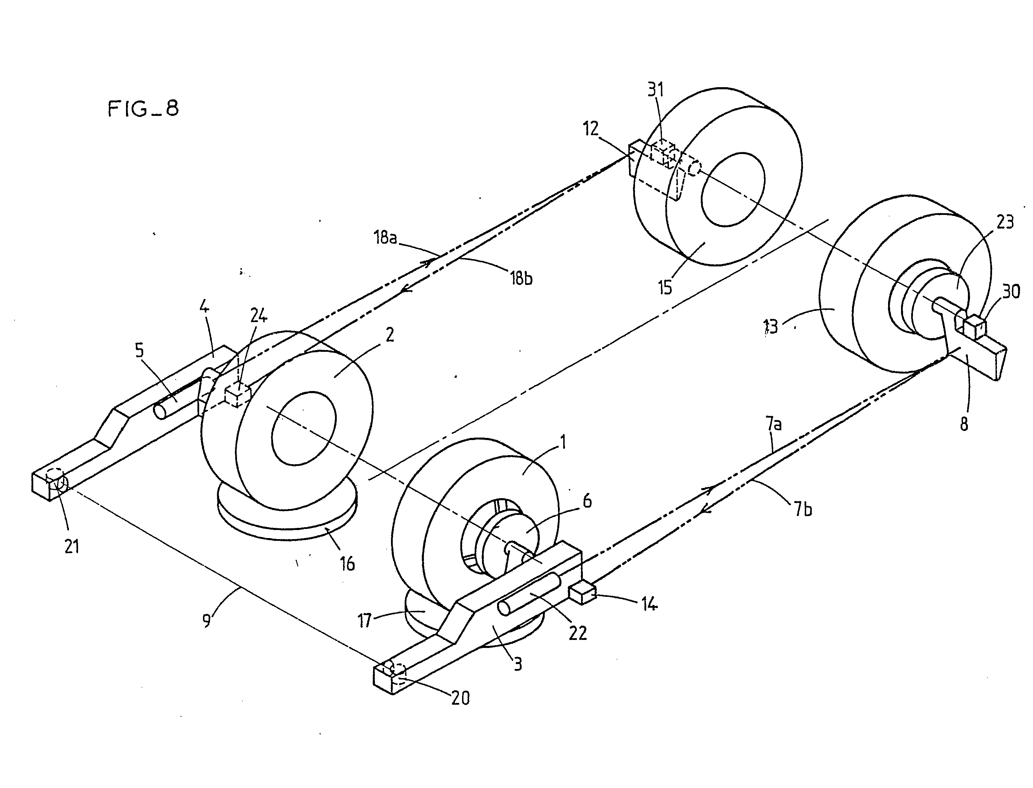

L'appareillage illustré à la figure 8, comprend, associée à chaque roue arrière (13, 15), une cellule photosensible (30, 31) respectivement montée au-dessus du miroir correspondant (8, 12) à une distance a du plan médian de chaque roue (13, 15) égale pour les deux roues.

Lors du braquage des roues avant (1, 2) de gauche à droite et inversement, les traits lumineux parallèles aux plans médians des roues avant (7a, 18a) viennent ainsi frapper alternativement les cellules 30 et 31.

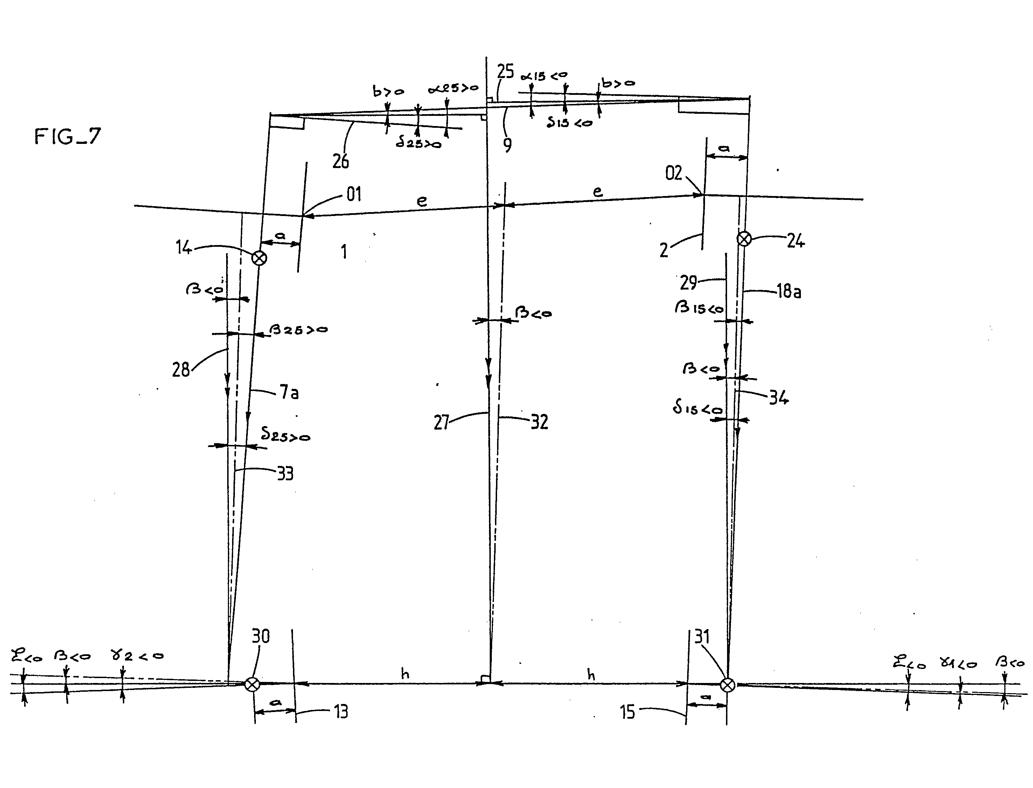

Ainsi, dans la situation de la figure 6, le trait 7a vient frapper la cellule arrière gauche 30, tandis que le trait lumineux 18a frappe un point situé au-delà de la cellule arrière droite 31, cette situation étant inversée à la figure 7. Le véhicule schématisé sur ces figures a d'autre part la voie avant 2e supérieure à la voie arrière 2h, et l'essieu avant 1, 2 décalé sur la droite par rapport à l'essieu arrière (13, 15).

On définit ci-après les angles et références portés sur ces figures:

La droite 32 est l'axe de symétrie du véhicule, c'est-à-dire la droite joignant les milieux des deux essieux.

Les droites 33 et 34 sont des parallèles à l'axe de symétrie 32, passant respectivement par les points d'impact des traits lumineux 7a et 18a.

$\delta_{24}$ = angle de parallélisme de la roue avant gauche (1) par rapport à l'axe de poussée (27) lorsque le trait lumineux (7a) frappe la cellule arrière gauche (30) (figure 6),

$\alpha_{24}$ = valeur de l'angle $\alpha_2$ de la roue avant gauche (1) lorsque le trait lumineux (7a) frappe la cellule arrière gauche (30) (figure 6),

$\delta_{14}$ = angle de parallélisme de la roue avant droite (2) par rapport à l'axe de poussée (27) lorsque l'on est dans le cas de la figure 6.

$\alpha_{14}$ = valeur de l'angle $\alpha_1$ de la roue avant droite (2), lorsque l'on est dans le cas de la figure 6.

$\delta_{15}$ = angle de parallélisme de la roue avant droite (2) par rapport à l'axe de poussée (27) lorsque le trait lumineux (18a) frappe la cellule arrière droite (31) (figure 7),

$\alpha_{15}$ = valeur de l'angle $\alpha_1$ pour la roue avant droite (2) lorsque le trait lumineux (18a) frappe la cellule arrière droite (31),

$\delta_{25}$ = angle de parallélisme de la roue avant gauche (1) par rapport à l'axe de poussée 27 lorsqu'on est dans le cas de la figure 7,

$\alpha_{25}$ = valeur de l'angle $\alpha_2$ pour la roue avant gauche (1) lorsqu'on est dans le cas de la figure 7,

$\beta$ = angle de crabe du véhicule, c'est-à-dire l'angle ayant pour côtés, d'une part l'axe de poussée (27) et d'autre part l'axe de symétrie (32) du véhicule,

$\beta_1$ = angle de parallélisme avant droit en fonction de l'axe de symétrie (32),

$\beta_2$ = angle de parallélisme avant gauche en fonction de l'axe de symétrie (32),

$\beta_{10}$ = angle de parallélisme avant droit par rapport à l'axe de symétrie (32) lorsque la direction est à son point de centre mécanique,

$\beta_{20}$ = angle de parallélisme avant gauche par rapport à l'axe de symétrie (32) lorsque la direction est à son point de centre mécanique.

$\beta_{13}$ = angle de parallélisme dynamique avant droit par rapport à l'axe de symétrie (32),

$\beta_{23}$ = angle de parallélisme dynamique avant gauche par rapport à l'axe de symétrie (32),

$\gamma_1$ = angle de parallélisme arrière droit en fonction de l'axe de symétrie (32) (figure 6),

$\gamma_2$ = angle de parallélisme arrière gauche en fonction de l'axe de symétrie (32).

Par des considérations géométriques simples et d'auprès les figures 6 et 7, on voit que l'angle de crabe $\beta$ est donné par la formule:

$$\beta = \frac{\delta_{15} - \delta_{24}}{2}$$

En fonction des mesures réalisées successivement par les capteurs 21 et 20, cette relation devient:

$$\beta = \frac{\alpha_{15} - \alpha_{24}}{2} + \frac{\alpha_{21} - \alpha_{11} + \alpha_{22} - \alpha_{12}}{4}$$

On voit également d'après les figures 6 et 7 que les angles de parallélisme avant et arrière en fonction de l'axe de symétrie 32 ont pour valeur:

$$\beta_{14} = \delta_{14} - \beta = \alpha_{14} - \frac{\alpha_{15} - \alpha_{24}}{2}$$

$$\beta_{24} = \delta_{24} + \beta = \alpha_{24} + \frac{\alpha_{15} - \alpha_{24}}{2}$$

$$\beta_{15} = \delta_{15} - \beta = \alpha_{15} - \frac{\alpha_{15} - \alpha_{24}}{2}$$

$$\beta_{25} = \delta_{25} + \beta = \alpha_{25} + \frac{\alpha_{15} - \alpha_{24}}{2}$$

Il en résulte:

$$\gamma_1 = \xi - \beta = \frac{\alpha_{12} + \alpha_{21}}{2} - \frac{\alpha_{15} - \alpha_{24}}{2} - \frac{\alpha_{21} - \alpha_{11} + \alpha_{22} - \alpha_{12}}{4}$$

$$\gamma_2 = \xi + \beta = \frac{\alpha_{12} + \alpha_{21}}{2} + \frac{\alpha_{15} - \alpha_{24}}{2} + \frac{\alpha_{21} - \alpha_{11} + \alpha_{22} - \alpha_{12}}{4}$$

Les angles $\beta_{14}$, $\beta_{24}$, $\beta_{15}$, $\beta_{25}$ ne présentent pas physiquement des résultats intéressants pour l'opérateur. Par contre, leur application pour les cas des figures 4 et 5 et leur généralisation pour la phase de réglage donnent les résultats suivants:

– angle de parallélisme avant droit par rapport à l'axe de symétrie 32 lorsque la direction est centrée (figure 5):

$$\beta_{10} = \alpha_{10} - \frac{\alpha_{15} - \alpha_{24}}{2}$$

– angle de parallélisme avant gauche par rapport à l'axe de symétrie 32, lorsque la direction est centrée:

$$\beta_{20} = \alpha_{20} + \frac{\alpha_{15} - \alpha_{24}}{2}$$

– angle de parallélisme dynamique avant droit par rapport à l'axe de symétrie 32:

$$\beta_{13} = \frac{\alpha_{11} + \alpha_{12}}{2} - \frac{\alpha_{15} - \alpha_{24}}{2}$$

– angle de parallélisme dynamique avant gauche par rapport à l'axe de symétrie 32:

$$\beta_{23} = \frac{\alpha_{21} + \alpha_{22}}{2} + \frac{\alpha_{15} - \alpha_{24}}{2}$$

– angle de parallélisme avant droit par rapport à l'axe de symétrie 32, ceci en phase de réglage:

$$\beta_{1n} = \alpha_{1n} - \frac{\alpha_{15} - \alpha_{24}}{2}$$

– angle de parallélisme avant gauche par rapport à l'axe de symétrie 32, ceci en phase de réglage:

$$\beta_{2n} = \alpha_{2n} + \frac{\alpha_{15} - \alpha_{24}}{2}$$

On voit à la figure 6 les éléments supplémentaires suivants:

La droite 35a est la perpendiculaire à l'axe de symétrie 32 menée de l'extrémité avant du bras avant droit 4, c'est-à-dire du point fixe 21.

La droite 36a est la perpendiculaire à l'axe de symétrie 32 menée de l'extrémité avant (20) du bras avant gauche (3).

– k est l'angle de set-back statique du véhicule, c'est-à-dire l'angle ayant pour sommet le centre $(0_1, 0_2)$ de chaque roue avant (1, 2) et pour côtés, d'une part la droite $0_1, 0_2$ joignant les centres $0_1$ et $0_2$, et d'autre part la perpendiculaire respective (36, 35) à l'axe 32.

On constate que le set-back statique k du véhicule est donné par la formule:

$$k = b - \beta$$

$$k = -\frac{\alpha_{15} - \alpha_{24}}{2}$$

En conclusion, on voit que si l'on ajoute conformément à un mode de réalisation perfectionné de l'appareillage selon l'invention, les cellules arrière 30 et 31, le dispositif peut afficher à la fin de la seconde phase de contrôle les résultats suivants:

Valeurs angulaires en fonction de l'axe de poussée 27.
– $\delta_{10}$, $\delta_{20}$
– $\delta_{13}$, $\delta_{23}$, b
– $2\xi$

Valeurs angulaires en fonction de l'axe de symétrie 32.
– $\beta_{10}$, $\beta_{20}$
– $\beta_{13}$, $\beta_{23}$
– $\gamma_1$, $\gamma_2$,
– $\beta$, k

Pendant la phase de réglage on peut également afficher en continu les résultats suivants:

$\delta_{1n}$, $\delta_{2n}$, $\beta_{1n}$, $\beta_{2n}$.

L'invention n'est pas limitée aux séquences opératoires décrites. On peut en effet afficher, en plus des valeurs $(\delta_{10} - \delta_{20})$ et

$$\frac{(\delta_{10} - \delta_{20})}{2}$$

mentionnées ci-dessus, la valeur $(\beta_{10} - \beta_{20})$ représentant l'écart entre les angles de parallélisme des roues avant (1, 2) par rapport à l'axe de symétrie 32 lorsque la direction est centrée. On peut également afficher la valeur

$$\frac{(\beta_{10} - \beta_{20})}{2}$$

représentant l'angle entre la bissectrice des roues avant (1, 2) et l'axe de symétrie 32 lorsque la direction est centrée.

D'une manière plus générale, l'invention permet la détermination de tous les résultats obtenus par la combinaison linéaire:

$C_1 \times \alpha_{10} + C_2 \times \alpha_{20} + C_3 \times \alpha_{11} + C_4 \times \alpha_{21} + C_5 \times \alpha_{12} + C_6 \times \alpha_{22} + C_7 \times \alpha_{14} + C_8 \times \alpha_{24} + C_9 \times \alpha_{15} + C_{10} \times \alpha_{25}$, où $C_i$ avec i de 1 à 10 sont des nombres réels,

– d'une part des valeurs lues $\alpha_1$, $\alpha_2$ de façon continue par l'intermédiaire des capteurs 21 et 20,

– et d'autre part des valeurs mémorisées $\alpha_{10}$, $\alpha_{20}$, $\alpha_{11}$, $\alpha_{21}$, $\alpha_{12}$, $\alpha_{22}$, $\alpha_{14}$, $\alpha_{24}$, $\alpha_{15}$, $\alpha_{25}$ lors de l'initialisation du processus de mesure et lors des réceptions des tops délivrés par les cellules photosensibles 14, 24, 30 et 31.

Les cellules 14, 24 sont de préférence, mais non nécessairement, positionnées dans le plan vertical du faisceau respectif (7a, 18a). Dans le cas où elles ne seraient pas placées dans ces plans verticaux, une correction devrait être introduite.

Les distances a entre les cellules 30 et 31 et les plans médians des roues arrière ne sont pas obligatoirement égales entre le train avant et le train arrière (figure 6).

Le procédé et l'appareillage de mise en œuvre selon l'invention permettent donc, à partir de la mesure de deux valeurs angulaires de base $\alpha_1$ et $\alpha_2$, et dans les différentes configurations des roues décrites ci-dessus, de déterminer au moyen du calculateur toute une série de paramètres angulaires du véhicule, et de régler ceux-ci de façon continue grâce à un affichage des résultats obtenus par le calculateur. Ces valeurs sont calculées de façon extrêmement précise, et il convient de souligner que le système de mise en œuvre de ce procédé est relativement peu onéreux par rapport à certains systèmes connus, en particulier ceux utilisant des émetteurs laser et des barrettes de diodes.

**Revendications**

1. Procédé pour mesurer le parallélisme des roues des trains avant et arrière de véhicules automobiles en fonction de l'axe de poussée (27) du véhicule, c'est-à-dire la bissectrice de l'angle formé par les plans verticaux médians des roues arrière de celui-ci, ainsi que l'angle de «set-back» entre les roues du train avant, en rapportant, sur chaque roue avant (1, 2) un bras (3, 4) sensiblement horizontal portant d'une part des moyens (9, 20, 21) pour matérialiser une droite de référence reliant deux points fixes situés sur les bras correspondants, et d'autre part un émetteur (5, 22) d'un pinceau lumineux (7a, 18a) parallèle au plan de la roue avant correspondante et dirigé vers la roue arrière (13, 15) située du même côté, sur laquelle est adapté un miroir (8, 12) de réflexion du pinceau lumineux correspondant sur une cellule photosensible (14, 24) montée sur le bras porté par la roue avant respective, caractérisé en ce que l'on manœuvre la direction du véhicule pour la placer au point de centre de celle-ci, on mesure successivement pour chaque roue avant (1, 2), les angles, $\alpha_1$ et $\alpha_2$ pour les roues droite et gauche, respectivement, entre la droite de référence précitée et la perpendiculaire au bras (3, 4) associé à la roue correspondante, tracée à partir du point fixe correspondant, et ce dans une position dite «0» du train avant telle que celui-ci se trouve à son point de centre, afin de mesurer $\alpha 10$ et $\alpha 20$ respectivement pour la roue avant droite et la roue avant gauche, dans ladite position «0», puis on braque la direction dans une position dite «1» telle que le pinceau lumineux avant gauche (7a, 7b) vienne frapper la cellule avant gauche (14) tandis que le pinceau lumineux avant droit (18a, 18b) est réfléchi au-delà de la cellule correspondante (24) afin de mesurer $\alpha 11$ et $\alpha 21$ respectivement pour la roue avant droite (2) et la roue avant gauche (1), dans ladite position «1» puis, après braquage de la direction dans une position dite «2» inverse de la précédente, pour laquelle le pinceau lumineux avant droit (18a, 18b) vienne frapper la cellule correspondante (24) tandis que le pinceau lumineux avant gauche (7a, 7b) vient frapper un point situé au-delà de la cellule (14) de la roue avant gauche, on mesure $\alpha 12$ et $\alpha 22$ respectivement pour la roue droite et la roue avant gauche dans ladite position «2», puis à partir des quatre angles ainsi relevés, on détermine géométriquement et on calcule successivement:

$\delta 10$ = angle de parallélisme avant droit en fonction de l'axe de poussée, lorsque la direction est centrée, cet angle de parallélisme, positif s'il correspond à un pincement et négatif s'il correspond à une ouverture, étant l'angle entre la droite perpendiculaire au plan vertical contenant le faisceau lumineux tracé à partir d'un point fixe et la perpendiculaire à l'axe de poussée, également tracée à partir du même point fixe;

$\delta 20$ = angle de parallélisme avant gauche en fonction de l'axe de poussée, lorsque la direction est centrée, cet angle étant similaire au précédent, mais pour le côté gauche;

$\delta 13$ = angle de parallélisme avant droit lorsque le parallélisme avant est également réparti par rapport à l'axe de poussée;

$\delta 23$ = angle de parallélisme avant gauche lorsque le parallélisme avant est également réparti par rapport à l'axe de poussée;

b = l'angle de «set-back» dynamique, c'est-à-dire l'angle ayant pour sommet le centre de chaque roue avant et pour côté, d'une part la droite joignant les centres des roues avant et d'autre part la perpendiculaire à l'axe de poussée, tracée à partir du centre de la roue avant.

$\xi$ = demi-angle de parallélisme du train arrière en fonction de l'axe de poussée, c'est-à-dire l'angle formé, pour chaque roue, par la perpendiculaire à l'axe de poussée, et la perpendiculaire au plan médian de la roue correspondante, ces perpendiculaires étant matérialisées par les plans des miroirs, les valeurs angulaires précitées étant déterminées dans un calculateur électronique par les relations suivantes, établies géométriquement:

$$2\xi = \alpha_{12} + \alpha_{21}$$

$$b = \frac{\alpha_{21} - \alpha_{11} + \alpha_{22} - \alpha_{12}}{4}$$

$$\delta_{13} = \frac{\alpha_{11} + \alpha_{12}}{2} + b$$

$$\delta_{23} = \frac{\alpha_{21} + \alpha_{22}}{2} - b$$

$$\delta_{10} = \alpha_{10} + \frac{\alpha_{21} - \alpha_{11} + \alpha_{22} - \alpha_{12}}{4}$$

$$\delta_{20} = \alpha_{20} - \frac{\alpha_{21} - \alpha_{11} + \alpha_{22} - \alpha_{12}}{4}$$

2. Procédé selon la revendication 1, caractérisé en ce que dans le calculateur électronique on détermine en permanence les valeurs du parallélisme individuel $\delta 1$ de la roue avant droite (2) et $\delta 2$ de la roue avant gauche (1) à différents temps «n», donc les valeurs $\delta 1n$ et $\delta 2n$, suivant les relations

$$\delta_{1n} = \alpha_{1n} + \frac{\alpha_{21} - \alpha_{11} + \alpha_{22} - \alpha_{12}}{4}$$

$$\delta_{2n} = \alpha_{2n} + \frac{\alpha_{21} - \alpha_{11} + \alpha_{22} - \alpha_{12}}{4}$$

où $\alpha_{1n}$ et $\alpha_{2n}$ correspondent respectivement aux angles $\alpha_1$ et $\alpha_2$ aux temps «n», ces valeurs étant affichés pour pouvoir être visualisées par l'opérateur, qui règle alors le parallélisme des roues avant aux valeurs voulues.

3. Procédé selon l'une des revendications 1 et 2, dans lequel on braque les roues avant pour obtenir la configuration correspondant au parallélisme dynamique du véhicule, c'est-à-dire la situation dans laquelle le parallélisme avant est également réparti par rapport à l'axe de poussée, les valeurs angulaires affichées indiquant à l'opérateur le sens de braquage puis la position exacte du volant et du point de centre de la direction lorsque le conducteur lâche le volant sur route, cette position étant obtenue lorsque les relations suivantes sont satisfaites:

$$\alpha_{13} = \frac{\alpha_{11} + \alpha_{12}}{2}$$

$$\alpha_{23} = \frac{\alpha_{21} + \alpha_{22}}{2}$$

4. Procédé selon l'une quelconque des revendications 1 à 3, caractérisé en ce qu'on place, au-dessus des miroirs (8, 12) portés par les roues arrières (13, 15), des cellules photosensibles (30,31) respectivement, de manière que les distances entre ces cellules et les plans médians des roues correspondantes soient égales, que lors du braquage de gauche à droite, ou inversement de droite à gauche, du train avant les pinceaux lumineux viennent frapper les cellules (30, 31) respectives des roues arrières, et que en utilisant les définitons des valeurs angulaires suivantes:

$\delta 24$ = angle de parallélisme de la roue avant gauche par rapport à l'axe de poussée lorsque le trait lumineux frappe la cellule arrière gauche,

$\alpha 24$ = valeur de l'angle $\alpha 2$ de la roue avant gauche lorsque le trait lumineux frappe la cellule arrière gauche,

$\delta 14$ = angle de parallélisme de la roue avant droite par rapport à l'axe de poussée lorsque le trait lumineux frappe la cellule arrière gauche,

$\alpha 14$ = valeur de l'angle $\alpha 1$ de la roue avant droite, lorsque le trait lumineux frappe la cellule arrière gauche,

$\delta 15$ = angle de parallélisme de la roue avant droite par rapport à l'axe de poussée lorsque le trait lumineux frappe la cellule arrière droite,

$\alpha 15$ = valeur de l'angle $\alpha 1$ pour la roue avant droite lorsque le trait lumineux frappe la cellule arrière droite,

$\delta 25$ = angle de parallélisme de la roue avant gauche par rapport à l'axe de poussée lorsque le trait lumineux frappe la cellule arrière droite,

$\alpha 25$ = valeur de l'angle $\alpha 2$ pour la roue avant gauche lorsque le trait lumineux frappe la cellule arrière droite,

$\beta$ = angle de crabe du véhicule, c'est-à-dire l'angle ayant pour côté, d'une part l'axe de poussée et d'autre part l'axe de symétrie du véhicule, en l'occurrence la droite joignant les milieux des deux essieux,

$\beta 1$ = angle de parallélisme avant droite en fonction de l'axe de symétrie,

$\beta 2$ = angle de parallélisme avant gauche en fonction de l'axe de symétrie,

$\beta 10$ = angle de parallélisme avant droit par rapport à l'axe de symétrie lorsque la direction est à son point de centre mécanique,

$\beta 20$ = angle de parallélisme avant gauche par rapport à l'axe de symétrie lorsque la direction est à son point de centre mécanique,

$\beta 13$ = angle de parallélisme dynamique avant droit par rapport à l'axe de symétrie,

$\beta 23$ = angle de parallélisme avant gauche par rapport à l'axe de symétrie,

$\gamma 1$ = angle de parallélisme arrière droit en fonction de l'axe de symétrie,

$\gamma 2$ = angle de parallélisme arrière gauche en fonction de l'axe de symétrie,

on établit géométriquement et on détermine dans le calculateur électronique les valeurs angulaires suivantes:

$$\beta = \frac{\delta_{15} - \delta_{24}}{2} = \frac{\alpha_{15} - \alpha_{24}}{2} + \frac{\alpha_{21} - \alpha_{11} - \alpha_{22} - \alpha_{12}}{4}$$

$$\gamma_1 = \xi - \beta = \frac{\alpha_{12} + \alpha_{21}}{2} - \frac{\alpha_{15} - \alpha_{24}}{2} - \frac{\alpha_{21} - \alpha_{11} + \alpha_{22} - \alpha_{12}}{4}$$

$$\gamma_2 = \xi + \beta = \frac{\alpha_{12} + \alpha_{21}}{2} + \frac{\alpha_{15} - \alpha_{24}}{2} + \frac{\alpha_{21} - \alpha_{11} + \alpha_{22} - \alpha_{12}}{4}$$

$$\beta_{10} = \alpha_{10} - \frac{\alpha_{15} - \alpha_{24}}{2}$$

$$\beta_{20} = \alpha_{20} + \frac{\alpha_{15} - \alpha_{24}}{2}$$

$$\beta_{13} = \frac{\alpha_{11} + \alpha_{12}}{2} - \frac{\alpha_{15} - \alpha_{24}}{2}$$

$$\beta_{23} = \frac{\alpha_{21} + \alpha_{22}}{2} + \frac{\alpha_{15} - \alpha_{24}}{2}$$

puis après affichage visuel de ces valeurs par le calculateur, on exécute un réglage de $\beta 1$ et $\beta 2$ aux valeurs voulues, les valeurs intermédiaires au temps «n» $\beta 1n$ et $\beta 2n$ restant visuellement affichées.

5. Procédé selon la revendication 4, caractérisé en ce que, le «set-back» statique k du véhicule étant défini comme l'angle ayant pour sommet le centre de chaque roue avant, et pour côtés, d'une part la droite joignant les centres et d'autre part la perpendiculaire respective à l'axe de symétrie, on calcule le «set-back» statique par la formule:

$$k = b - \beta$$

d'où

$$k = - \frac{\alpha_{15} - \alpha_{24}}{2}$$

6. Procédé selon l'une des revendications 1 à 5, caractérisé en ce qu'on effectue des combinaisons linéaires dans le calculateur, suivant la relation:

$C_1 \times \alpha_{10} + C_2 \times \alpha_{20} + C_3 \times \alpha_{11} + C_4 \times \alpha_{21} + C_5 \times \alpha_{12} + C_6 \times \alpha_{22} + C_7 \times \alpha_{14} + C_8 \times \alpha_{24} + C_9 \times \alpha_{15} + C_{10} \times \alpha_{25}$ où $C_i$ avec i de 1 à 10 sont des nombres réels.

– d'une part des valeurs lues α1, α2 de façon continue par l'intermédiaire de capteurs,

– et d'autre part des valeurs mémorisées α10, α20, α11, α21, α12, α14, α24, α15, α25, lors de l'initialisation du processus de mesure et lors des réceptions des tops délivrés par les cellules photosensibles.

7. Appareillage pour la mise en œuvre du procédé selon l'une des revendications 1 à 3, comprenant un bras (3, 4) fixé horizontalement contre chaque roue avant (1, 2) et, sur chaque bras, des moyens comportant un capteur angulaire (20, 21) pour matérialiser une droite de référence reliant deux points fixes situés respectivement sur l'un et l'autre bras, un émetteur (5, 22) d'un pinceau lumineux parallèle au plan de la roue avant correspondante et dirigé vers la roue arrière (13, 15) située du même côté, et un miroir (8, 12) porté par ladite roue arrière pour réfléchir le pinceau lumineux (7a, 18a) sur une cellule photosensible (14, 24) montée sur le bras correspondant, caractérisé en ce que les moyens pour matérialiser la droite de référence entre deux points fixes situés sur lesdits bras (3, 4) sont constitués par un fil tendeur (9) dont chaque extrémité est connectée à l'un desdits capteurs (20, 21), le signal délivré par chaque capteur étant représentatif de la position de ce fil tendeur par rapport à la perpendiculaire au bras correspondant, ces capteurs étant notamment des potentiomètres.

8. Appareillage selon la revendication 7, destiné à la mise en œuvre du procédé selon l'une quelconque des revendications 4 à 6, caractérisé en ce qu'il comporte, pour chaque roue arrière (13, 15), une cellule photosensible (30, 31) montée au-dessus du miroir (8, 12) à une distance du plan médian de chaque roue égale pour les deux roues arrière, de telle sorte que les pinceaux lumineux (7a, 18a) viennent frapper alternativement les cellules (30, 31) des roues arrières lors du braquage des roues avant (1, 2) de gauche à droite, et inversement.

**Claims**

1. Method for measuring the parallel alignment of the front and rear wheel systems of automotive vehicles as a function of the axis of thrust (27), of the vehicle, that is to say the bisector-line of the angle formed by the vertical mid-planes of the rear wheels of this latter as well as the setback angle between the wheels of the front system, by mounting separately on each front wheel (1, 2) a substantially horizontal arm (3, 4) which carries on the one hand means (9, 20, 21) for materializing a reference straight line which connects two fixed points located on the corresponding arms and on the other hand an emitter (5, 22) for producing a light beam (7a, 18a) parallel to the plane of the corresponding front wheel and directed towards the rear wheel (13, 15) which is located on the same side and on which is adapted a mirror (8, 12) for reflecting the corresponding light beam onto a photosensitive cell (14, 24) mounted on the arm carried by the respective front wheel, characterized in that the steering system of the vehicle is operated so as to be placed at the centre-point thereof, the angles $\alpha_1$ and $\alpha_2$ in the case of the right-hand and left-hand wheels respectively between the aforesaid reference straight line and the line which is perpendicular to the arm (3, 4) associated with the corresponding wheel and which is drawn from the corresponding fixed point is measured successively in the case of each front wheel (1, 2) in a position designated as «0» of the front wheel system such that this latter is located at its centre point in order to measure $\alpha_{10}$ and $\alpha_{20}$ respectively in the case of the right-hand front wheel and the left-hand front wheel in said position «0», whereupon the steering system is turned to a positon designated as «1» such that the left-hand front light beam (7a, 7b) impinges on the left-hand front cell (14) whilst the right-hand front light beam (18a, 18b) is reflected beyond the corresponding cell (24) in order to measure $\alpha_{11}$ and $\alpha_{21}$ respectively in the case of the right-hand front wheel (2) and the left-hand front wheel (1) in said position «1» whereupon, after turning the steering system to a position designated as «2» which is reverse to the preceding and in which the right-hand front light beam (18a, 18b) impinges on the corresponding cell (24) whilst the left-hand front light beam (7a, 7b) impinges on a point located beyond the cell (14) of the left-hand front wheel $\alpha_{12}$ and $\alpha_{22}$ are measured respectively in the case of the right-hand front wheel and the left-hand front wheel in said position «2», then from the four angles thus measured, there are determined geometrically and computed successively:

$\delta_{10}$ = right-hand front wheel alignment angle as a function of the thrust axis when the steering system is centred, this wheel alignment angle, which is positive if it corresponds to toe-in and negative if it corresponds to toe-out, being the angle between the straight line perpendicular to the vertical plane containing the light beam drawn from a fixed point and the line perpendicular to the thrust axis, which is also drawn from the same fixed point;

$\delta_{20}$ = left-hand front wheel alignment angle as a function of the thrust axis when the steering system is centred, this angle being similar to the preceding but in respect of the left-hand side;

$\delta_{13}$ = right-hand front wheel alignment when the front wheel alignment is equally distributed with respect to the thrust axis;

$\delta_{23}$ = left-hand front wheel alignment when the front wheel alignment is equally distributed with respect to the thrust axis;

b = the dynamic setback angle or in other words the angle whose vertex is the centre of each front wheel and whose sides are constituted on the one hand by the straight line which joins the centres of the front wheels and on the other hand by the line which is perpendicular to the thrust axis and drawn from the centre of the front wheel;

$\xi$ = wheel alignment half-angle of the rear wheel system as a function of the thrust axis or in other words the angle formed in the case of each wheel by the line perpendicular to the thrust axis and the line perpendicular to the mid-plane of the corresponding wheel, these perpendicular lines being materialized by the planes of the mirrors, the aforesaid angle values being determined in an electronic computer by the following relations established geometrically:

$$2\xi = \alpha_{12} + \alpha_{21}$$

$$b = \frac{\alpha_{21} - \alpha_{11} + \alpha_{22} - \alpha_{12}}{4}$$

$$\delta_{13} = \frac{\alpha_{11} + \alpha_{12}}{2} + b$$

$$\delta_{23} = \frac{\alpha_{21} + \alpha_{22}}{2} - b$$

$$\delta_{10} = \alpha_{10} + \frac{\alpha_{21} - \alpha_{11} + \alpha_{22} - \alpha_{12}}{4}$$

$$\delta_{20} = \alpha_{20} - \frac{\alpha_{21} - \alpha_{11} + \alpha_{22} - \alpha_{12}}{4}$$

2. Method in accordance with claim 1, characterized in that, in the electronic computer, there are continuously determined the values of the individual alignment $\delta_1$ of the right-hand front wheel (2) and $\delta_2$ of the left-hand front wheel (1) at different instants «n», therefore the values $\delta_{1n}$ and $\delta_{2n}$, in accordance with the relations

$$\delta_{1n} = \alpha_{1n} + \frac{\alpha_{21} - \alpha_{11} + \alpha_{22} - \alpha_{12}}{4}$$

$$\delta_{2n} = \alpha_{2n} + \frac{\alpha_{21} - \alpha_{11} + \alpha_{22} - \alpha_{12}}{4}$$

where $\alpha_{1n}$ and $\alpha_{2n}$ correspond respectively to the angles $\alpha_1$ and $\alpha_2$ at the instants «n», these values being displayed in order to be visualized by the operator who then adjusts the alignment of the front wheels to the desired values.

3. Method in accordance with claim 1 or claim 2, wherein the front wheels are turned in order to obtain the configuration corresponding to dynamic wheel alignment of the vehicle or in other words to the situation in which the front wheel alignment is equally distributed with respect to the axis of thrust, the angle values displayed being such as to provide the operator with an indication of the direction of turning of the wheels, then of the exact position of the steering-wheel and of the centre-point of the steering system when the driver releases the steering-wheel on a roadway, this position being obtained when the following relations are satisfied:

$$\alpha_{13} = \frac{\alpha_{11} + \alpha_{12}}{2}$$

$$\alpha_{23} = \frac{\alpha_{21} + \alpha_{22}}{2}$$

4. Method in accordance with any one of claims 1 to 3, characterized in that photosensitive cells (30, 31) are placed respectively above mirrors (8, 12) carried by the rear wheels (13, 15) in such a manner as to ensure that the distances between these cells and the mid-planes of the corresponding wheels are equal, that the light beams impinge on the respective cells (30, 31) of the rear wheels when the front wheel system is turned from left to right or conversely from right to left and that, by utilizing the definitions of the following angle values:

$\delta_{24}$ = left-hand front wheel alignment angle with respect to the thrust axis when the light ray impinges on the left-hand rear cell,

$\alpha_{24}$ = value of the angle $\alpha_2$ of the left-hand front wheel when the light ray impinges on the left-hand rear cell,

$\delta_{14}$ = right-hand front wheel alignment angle with respect to the thrust axis when the light ray impinges on the left-hand rear cell,

$\alpha_{14}$ = value of the angle $\alpha_1$ of the right-hand front wheel when the light ray impinges on the left-hand rear cell,

$\delta_{15}$ = right-hand front wheel alignment angle with respect to the thrust axis when the light ray impinges on the right-hand rear cell,

$\alpha_{15}$ = value of the angle $\alpha_1$ in the case of the right-hand front wheel when the light ray impinges on the right-hand rear cell,

$\delta_{25}$ = left-hand front wheel alignment angle with respect to the thrust axis when the light ray impinges on the right-hand rear cell,

$\alpha_{25}$ = value of the angle $\alpha_2$ in the case of the left-hand front wheel when the light ray impinges on the right-hand rear cell,

$\beta$ = vehicle side-slip or in other words the angle whose sides are constituted on the one hand by the thrust axis and on the other hand by the axis of symmetry of the vehicle, namely in this instance the straight line which joins the centres of the two axles,

$\beta_1$ = right-hand front wheel alignment angle as a function of the axis of symmetry,

$\beta_2$ = left-hand front wheel alignment angle as a function of the axis of symmetry,

$\beta_{10}$ = right-hand front wheel alignment angle with respect to the axis of symmetry when the steering system is at its mechanical centre-point,

$\beta_{20}$ = left-hand front wheel alignment angle with respect to the axis of symmetry when the steering system is at its mechanical centre-point,

$\beta_{13}$ = right-hand front dynamic wheel alignment angle with respect to the axis of symmetry,

$\beta_{23}$ = left-hand front wheel alignment angle with respect to the axis of symmetry,

$\gamma_1$ = right-hand rear wheel alignment angle as a function of the axis of symmetry,

$\gamma_2$ = left-hand rear wheel alignment angle as a function of the axis of symmetry,

the following angle values are established geometrically and determined in the electronic computer:

$$\beta = \frac{\delta_{15} - \delta_{24}}{2} = \frac{\alpha_{15} - \alpha_{24}}{2} + \frac{\alpha_{21} - \alpha_{11} - \alpha_{22} - \alpha_{12}}{4}$$

$$\gamma_1 = \xi - \beta = \frac{\alpha_{12} + \alpha_{21}}{2} - \frac{\alpha_{15} - \alpha_{24}}{2} - \frac{\alpha_{21} - \alpha_{11} + \alpha_{22} - \alpha_{12}}{4}$$

$$\gamma_2 = \xi + \beta = \frac{\alpha_{12} + \alpha_{21}}{2} + \frac{\alpha_{15} - \alpha_{24}}{2} + \frac{\alpha_{21} - \alpha_{11} + \alpha_{22} - \alpha_{12}}{4}$$

$$\beta_{10} = \alpha_{10} - \frac{\alpha_{15} - \alpha_{24}}{2}$$

$$\beta_{20} = \alpha_{20} + \frac{\alpha_{15} - \alpha_{24}}{2}$$

$$\beta_{13} = \frac{\alpha_{11} + \alpha_{12}}{2} - \frac{\alpha_{15} - \alpha_{24}}{2}$$

$$\beta_{23} = \frac{\alpha_{21} + \alpha_{22}}{2} + \frac{\alpha_{15} - \alpha_{24}}{2}$$

whereupon, after visual display of these values by the computer, $\beta_1$ and $\beta_2$ are adjusted to the requisite values whilst the intermediate values at the instants «n» $\beta_{1n}$ and $\beta_{2n}$ remain visually displayed.

5. Method in accordance with claim 4, characterized in that the «static setback angle» k of the vehicle being defined as the angle whose vertex is the centre of each front wheel and whose sides are constituted on the one hand by the straight line joining the centres and on the other hand the respective straight line perpendicular to the axis of symmetry, the static setback angle is computed from the formula:

$$k = b - \beta$$

whence

$$k = -\frac{\alpha_{15} - \alpha_{24}}{2}$$

6. Method in accordance with a any one of claims 1 to 5, characterized in that the computer forms linear combinations, in accordance with the relation:

$C_1 \times \alpha_{10} + C_2 \times \alpha_{20} + C_3 \times \alpha_{11} + C_4 \times \alpha_{21} + C_5 \times \alpha_{12} + C_6 \times \alpha_{22} + C_7 \times \alpha_{14} + C_8 \times \alpha_{24} + C_9 \times \alpha_{15} + C_{10} \times \alpha_{25}$, where $C_i$ with i from 1 to 10 are real numbers.

– on the one hand of the values $\alpha_1$, $\alpha_2$ which are read continuously by means of pickups,

– and on the other hand of the values $\alpha_{10}$, $\alpha_{20}$, $\alpha_{11}$, $\alpha_{21}$, $\alpha_{12}$, $\alpha_{14}$ $\alpha_{24}$, $\alpha_{15}$, $\alpha_{25}$ which are stored at the time of initialization of the measuring process and at the time of reception of pulses delivered by the photosensitive cells.

7. Equipment unit for the practical application of the method in accordance with one of claims 1 to 3, comprising an arm (3, 4) attached horizontally against each front wheel (1, 2) and, on each arm, means comprising an angular displacement pickup (20, 21) for defining a reference straight line which connects two fixed points located respectively on each of the two arms, an emitter (5, 22) for emitting a light beam which is parallel to the plane of the corresponding front wheel and directed towards the rear wheel (13, 15) located on the same side, and a mirror (8, 12) carried by said rear wheel for reflecting the light beam (7a, 18a) onto a photosensitive cell (14, 24) mounted on the corresponding arm, characterized in that the means for defining the reference straight line between two fixed points located on said arms (3, 4) are constituted by a tensioning wire (9), each end of which is connected to one of said pickups (20, 21), the signal delivered by each pickup being representative of the position of this tensioning wire with respect to the line perpendicular to the corresponding arm, these pickups being in particular potentiometers.

8. Equipment unit in accordance with claim 7 for the practical application of the method in accordance with any one of claims 4 to 6, characterized in that it comprises in the case of each rear wheel (13, 15) a photosensitive cell (30, 31) mounted above the mirror (8, 12) at a distance from the mid-plane of each wheel which is equal in the case of both rear wheels so that the light beams (7a, 18a) impinge alternately on the cells (30, 31) of the rear wheels when the front wheels (1, 2) are turned from left to right and conversely.

**Patentansprüche**

1. Verfahren zum Messen der Parallelität der Räder an Vorder- und Hinterachse eines Kraftfahrzeuges in Abhängigkeit von der Schubachse (27) des Fahrzeuges, d. h. der Winkelhalbierenden der vertikalen Mittelebenen der Hinterräder sowie des sogenannten «set back»-Winkels zwischen den Vorderrädern, indem auf jedes Vorderrad ein im wesentlich horizontaler Arm (3, 4) angebracht wird, welcher einerseits mit Mitteln (9, 20, 21) versehen ist, welche eine Bezugsgerade bilden, welche zwei feste Punkte auf dem entsprechenden Arm verbindet und andererseits eine Lichtquelle (5, 22) trägt, deren Lichtstrahl (7a, 18a) parallel zur Ebene des entsprechenden Vorderrades verläuft und auf das Hinterrad (13, 15) auf derselben Seite gerichtet ist, auf welchem seinerseits ein Spiegel (8, 12) vorgesehen ist, welcher den entsprechenden Lichtstrahl auf eine Fotozelle (14, 24) reflektiert, welche auf dem Arm am entsprechenden Vorderrad angebracht ist, dadurch gekennzeichnet, dass die Lenkung des Fahrzeuges in die Mittelstellung gebracht wird und nacheinander an jedem Vorderrad (1, 2) die Winkel $\alpha_1$ und $\alpha_2$ für das rechte bzw. linke Rad zwischen der Bezugsgeraden und der Senkrechten zum am entsprechenden Rad befestigten Arm (3, 4) gemessen werden, welche über den entsprechenden Festpunkt hinaus verlängert ist, wobei dies in der sogenannten «0-Stellung» der Vorderachse erfolgt, welche sich in ihrer Mittelstellung befindet, damit die Winkel $\alpha_{10}$ bzw. $\alpha_{20}$ des rechten Vorderrades und des linken Vorderrades in der «0»-Stellung gemessen werden können, woraufhin die Lenkung in eine Stellung «1» gebracht wird, so dass der linke, vordere Lichtstrahl (7a, 7b) auf die linke, vordere Fotozelle (14) trifft, so dass der rechte, vordere Lichtstrahl (18a, 18b) neben die entsprechende Fotozelle (27) reflektiert wird, so dass die Winkel $\alpha_{11}$ bzw. $\alpha_{21}$ für das rechte Vorderrad (2) und das linke Vorderrad (1) in der Stellung «1» gemessen werden können, woraufhin die Lenkung in eine Stellung «2» gebracht wird, welche der vorigen Stellung entgegengesetzt ist, so dass der rechte, vordere Lichtstrahl (18a, 18b) auf die entsprechende Fotozelle (24) trifft und der vordere, linke Lichtstrahl auf einen Punkt jenseits der Fotozelle (14) des linken Vorderrades trifft und die Winkel $\alpha_{12}$ bzw. $\alpha_{22}$ für das rechte und das linke Vorderrad in der Position «2» gemessen werden können, so dass nunmehr vier Winkel bestimmt worden sind und nunmehr nacheinander geometrisch und durch Rechnung folgender Winkel bestimmt werden können:

$\delta_{10}$ = der rechte Parallelitätswinkel in Abhängigkeit von der Schubachse, bei Mittelstellung der Lenkung, wobei dieser Parallelitätswinkel positiv ist, wenn es sich um eine Spurweitenverringerung handelt und negativ ist, wenn es sich um eine Erweiterung handelt, wobei dieser Winkel zwischen der senkrechten Geraden zur vertikalen Ebene durch den Lichtstrahl, welcher durch einen der Festpunkte hindurchläuft und einer ebenfalls durch denselben Festpunkt führenden Senkrechten zur Schubachse liegt.

$\delta_{20}$ = der linke, vordere Parallelitätswinkel in Abhängigkeit von der Schubachse bei Mittelstellung der Lenkung, wobei dieser Winkel dem zuvor erwähnten ähnlich ist, jedoch auf der linken Seite liegt;

$\delta_{13}$ = der rechte, vordere Parallelitätswinkel, wenn die Parallelität an der Vorderachse in Bezug zur Schubachse gleichmässig verteilt ist;

$\delta_{23}$ = der linke, vordere Parallelitätswinkel, wenn die Parallelität an der Vorderachse in Bezug zur Schubachse gleichmässig verteilt ist;

b = der Winkel des dynamischen «set-back's», d.h. der Winkel, der seinen Scheitel im Zentrum des jeweiligen Vorderrades aufweist und dessen Schenkel einerseits die Verbindungsgerade der Mittelpunkte der Vorderräder und andererseits die Senkrechte zur Schubachse durch die Mittelpunkte der Vorderräder sind;

$\xi$ = der halbe Parallelitätswinkel an der Hinterachse in Abhängigkeit von der Schubachse, d.h. des Winkels, welcher für jedes Rad gebildet ist aus der Senkrechten zur Schubachse und der Senkrechten zur Mittelebene des entsprechenden Rades, wobei diese Senkrechte durch die Ebene der Spiegel dargestellt ist und wobei die oben genannten Werte der Winkel mit einem Rechner aus folgenden Gleichungen bestimmt werden, welche auf geometrischem Wege aufgestellt wurden:

$$2\xi = \alpha_{12} + \alpha_{21}$$

$$b = \frac{\alpha_{21} - \alpha_{11} + \alpha_{22} - \alpha_{12}}{4}$$

$$\delta_{13} = \frac{\alpha_{11} + \alpha_{12}}{2} + b$$

$$\delta_{23} = \frac{\alpha_{21} + \alpha_{22}}{2} - b$$

$$\delta_{10} = \alpha_{10} + \frac{\alpha_{21} - \alpha_{11} + \alpha_{22} - \alpha_{12}}{4}$$

$$\delta_{20} = \alpha_{20} - \frac{\alpha_{21} - \alpha_{11} + \alpha_{22} - \alpha_{12}}{4}$$

2. Verfahren nach Anspruch 1, dadurch gekennzeichnet, dass in dem Elektronenrechner ständig die Werte der individuellen Parallelitätswinkel $\delta_1$ des rechten Vorderrades 2 und $\delta_2$ des linken Vorderrades 1 zu verschiedenen Zeiten «n» gemessen werden und die Werte der Winkel $\delta_{1n}$ und $\delta_{2n}$ folgenden Gleichungen genügen:

$$\delta_{1n} = \alpha_{1n} + \frac{\alpha_{21} - \alpha_{11} + \alpha_{22} - \alpha_{12}}{4}$$

$$\delta_{2n} = \alpha_{2n} - \frac{\alpha_{21} - \alpha_{11} + \alpha_{22} - \alpha_{12}}{4}$$

wobei

$\alpha_{1n}$ und $\alpha_{2n}$ den Winkeln $\alpha_1$ und $\alpha_2$ zu verschiedenen Zeiten «n» entsprechen, wobei diese Werte angezeigt werden und sich die Parallelität der Vorderräder auf die gewünschten Werte einstellen lässt.

3. Verfahren nach einem der Ansprüche 1 und 2, dadurch gekennzeichnet, dass die Vorderräder so eingeschlagen werden, dass ihre Stellung der dynamischen Parallelität des Fahrzeuges entspricht, d.h. in eine Stellung gebracht werden, in welcher die Parallelitätswinkel zur Schubachse gleich verteilt sind, wobei die angezeigten Werte der Winkel die Richtung des Lenkeinschlages angeben bis die genaue Stellung des Lenkrades und die Mittelstellung der Lenkung während der Fahrt bei freigegebenem Lenkrad erreicht ist, wobei diese Stellung erreicht wird, da folgende Gleichungen erfüllt sind:

$$\alpha_{13} = \frac{\alpha_{11} + \alpha_{12}}{2}$$

$$\alpha_{23} = \frac{\alpha_{21} + \alpha_{22}}{2}$$

4. Verfahren nach einem der Ansprüche 1–3, dadurch gekennzeichnet, dass über den Spiegeln (8, 12) an den Hinterrädern (13, 15) Fotozellen (30, 31) derart vorgesehen werden, dass die Abstände zwischen diesen Zellen und der Mittelebenen der entsprechenden Räder gleich sind, so dass beim Einschlagen der Räder der Vorderachse von links nach rechts oder umgekehrt von rechts nach links die Lichtstrahlen auf die Zellen (30, 31) an den Hinterrädern fallen und folgende Definitionen für die Winkelwerte benutzt werden:

$\delta_{24}$ = der Parallelitätswinkel des linken Vorderrades in Bezug zur Schubachse, wenn der Lichtstrahl auf die hintere, linke Fotozelle trifft;

$\alpha_{24}$ = der Wert des Winkels $\alpha_2$ des linken Vorderrades, wenn der Lichtstrahl auf die linke, hintere Fotozelle trifft;

$\delta_{14}$ = der Parallelitätswinkel des rechten Vorderrades in Bezug zur Schubachse, wenn der Lichtstrahl auf die hintere, linke Fotozelle trifft;

$\alpha_{14}$ = der Wert des Winkels $\alpha_1$ des rechten Vorderrades, wenn der Lichtstrahl auf die linke, hintere Fotozelle trifft;

$\delta_{15}$ = der Parallelitätswinkel des rechten Vorderrades in Bezug zur Schubachse, wenn der Lichtstrahl auf die rechte, hintere Fotozelle trifft;

$\alpha_{15}$ = der Wert des Winkels $\alpha_1$ des rechten Vorderrades, wenn der Lichtstrahl auf die rechte, hintere Fotozelle trifft;

$\delta_{25}$ = der Parallelitätswinkel des linken Vorderrades in Bezug zur Schubachse, wenn der Lichtstrahl auf die hintere, rechte Fotozelle trifft;

$\alpha_{25}$ = der Wert des Winkels $\alpha_2$ des linken Vorderrades, wenn der Lichtstrahl auf die rechte, hintere Fotozelle trifft;

$\beta$ = der Schiebewinkel des Fahrzeuges, d.h. der Winkel, dessen Schenkel einerseits die Schubachse und andererseits die Fahrzeugsymetrieachse ist, d.h. die Verbindungsgerade der Mittelpunkte der beiden Fahrzeugachsen;

$\beta_1$ = der vordere, rechte Parallelitätswinkel in Abhängigkeit von der Symmetrieachse;

$\beta_2$ = der vordere, linke Parallelitätswinkel in Abhängigkeit von der Symmetrieachse;

$\beta_{10}$ = der vordere, rechte Parallelitätswinkel in Bezug zur Symmetrieachse, wenn sich die Lenkung in ihrem mechanischen Mittelpunkt befindet;

$\beta_{20}$ = der vordere, linke Parallelitätswinkel in Bezug zur Symmetrieachse, wenn sich die Lenkung in ihrem mechanischen Mittelpunkt befindet;

$\beta_{13}$ = der vordere, rechte dynamische Parallelitätswinkel in Bezug zur Symmetrieachse;

$\beta_{23}$ = der vordere, linke Parallelitätswinkel in Bezug zur Symmetrieachse;

$\gamma_1$ = der hintere, rechte Parallelitätswinkel in Abhängigkeit von der Symmetrieachse;

$\gamma_2$ = der hintere, linke Parallelitätswinkel in Abhängigkeit von der Symmetrieachse;

dabei werden folgende Gleichungen auf geometrischem Wege aufgestellt und mit einem Elektronenrechner errechnet:

$$\beta = \frac{\delta_{15} - \delta_{24}}{2} = \frac{\alpha_{15} - \alpha_{24}}{2} + \frac{\alpha_{21} - \alpha_{11} - \alpha_{22} - \alpha_{12}}{4}$$

$$\gamma_1 = \xi - \beta = \frac{\alpha_{12} + \alpha_{21}}{2} - \frac{\alpha_{15} - \alpha_{24}}{2} - \frac{\alpha_{21} - \alpha_{11} + \alpha_{22} - \alpha_{12}}{4}$$

$$\gamma_2 = \xi + \beta = \frac{\alpha_{12} + \alpha_{21}}{2} + \frac{\alpha_{15} - \alpha_{24}}{2} + \frac{\alpha_{21} - \alpha_{11} + \alpha_{22} - \alpha_{12}}{4}$$

$$\beta_{10} = \alpha_{10} - \frac{\alpha_{15} - \alpha_{24}}{2}$$

$$\beta_{20} = \alpha_{20} + \frac{\alpha_{15} - \alpha_{24}}{2}$$

$$\beta_{13} = \frac{\alpha_{11} + \alpha_{12}}{2} - \frac{\alpha_{15} - \alpha_{24}}{2}$$

$$\beta_{23} = \frac{\alpha_{21} + \alpha_{22}}{2} + \frac{\alpha_{15} - \alpha_{24}}{2}$$

nach der visuellen Darstellung dieser Werte durch den Rechner erfolgt die Einstellung von $\beta_1$ und $\beta_2$ auf die gewünschten Werte, wobei die Zwischenwerte $\beta_{1n}$ und $\beta_{2n}$ zu den Zeitpunkten «n» sichtbar dargestellt werden.

5. Verfahren nach Anspruch 4, dadurch gekennzeichnet, dass das statische «set-back» k des Fahrzeuges durch den Winkel bestimmt ist, dessen Scheitelpunkt im Zentrum jeden Vorderrades liegt, und dessen Schenkel einerseits die Verbindungsgerade dieser Zentren und andererseits die Senkrechte zur Symmetrieachse ist, wobei sich das statische «set back» aus folgender Formel errechnet:

$$k = b - \beta$$

oder

$$k = -\frac{\alpha_{15} - \alpha_{24}}{2}$$

6. Verfahren nach einem der Ansprüche 1–5, dadurch gekennzeichnet, dass im Rechner Linearkombinationen folgender Relationen aufgestellt werden:

$C_1 \times \alpha_{10} + C_2 \times \alpha_{20} + C_3 \times \alpha_{11} + C_4 \times \alpha_{21} + C_5 \times \alpha_{12} + C_6 \times \alpha_{22} + C_7 \times \alpha_{14} + C_8 \times \alpha_{24} + C_9 \times \alpha_{15} + C_{10} \times \alpha_{25}$ wobei die $C_i$ für i aus 1–10 reelle Zahlen sind,

wobei ein Teil der Werte $\alpha_1$, $\alpha_2$ kontinuierlich mit den Messzellen erfasst und ein anderer Teil der Werte $\alpha_{10}$, $\alpha_{20}$, $\alpha_{11}$, $\alpha_{21}$, $\alpha_{12}$, $\alpha_{14}$, $\alpha_{24}$, $\alpha_{15}$, $\alpha_{25}$ gespeichert sind, wenn der Messvorgang beginnt und wenn die Impulse aus den Fotozellen aufgenommen werden.

7. Vorrichtung zum Durchführen des Verfahrens nach einem der Ansprüche 1–3, bei welchem ein Arm (3, 4) horizontal an jedem Vorderrad (1, 2) befestigt ist und jeder Arm einen Winkelaufnehmer (20, 21) aufweist, um eine Bezugsgerade darzustellen, welche zwei Fixpunkte auf dem einen und den anderen Arm verbindet und eine Lichtquelle (5, 22) vorgesehen ist, deren Lichtstrahl parallel zur Ebene des entsprechenden Vorderrades verläuft und auf das Hinterrad (13, 15) auf derselben Seite gerichtet ist, wobei das Hinterrad jeweils einen Spiegel (8, 12) trägt, welcher den Lichtstrahl (7a, 18a) auf eine Fotozelle (14, 24) am entsprechenden Arm reflektiert, dadurch gekennzeichnet, dass die Mitte zur Darstellung einer Bezugsgeraden zwischen den beiden Fixpunkten auf die Arme (3, 4) aus einem Spannfaden (9) gebildet sind, dessen Enden jeweils mit den Messaufnehmer (20, 21) verbunden sind, wobei das von diesen Zellen erzeugte Signal die Stellung des Spanndrahtes in Bezug zur Senkrechten zum entsprechenden Arm darstellt, wobei die Aufnehmer, insb. aus Potentiometern gebildet sind.

8. Vorrichtung nach Anspruch 7 zur Durchführung des Verfahrens nach einem der Ansprüche 4–6, dadurch gekennzeichnet, dass für jedes Hinterrad (13, 15) eine Fotozelle (30, 31) oberhalb des Spiegels (8, 12) vorgesehen ist und deren Abstand zu den Mittelebenen der Hinterräder gleich ist, so dass die Lichtstrahlung (7a, 18a) abwechselnd die Fotozelle (30, 31) an den Hinterrädern treffen, wenn die Vorderräder (1, 2) von links nach rechts und umgekehrt eingeschlagen werden.

FIG_1

FIG_2

0 063 057

$\alpha_{21} > 0$   $b > 0$   9   $\delta_{11} > 0$   $\alpha_{11} > 0$

20   $\delta_{21} < 0$   $b > 0$   21

26   25

62   61

14   $b > 0$   60   $b > 0$   2

7a   24

7b   18a   18b

$\delta_{21} = \alpha_{21} - b < 0$   29   $\varepsilon < 0$

$\varepsilon < 0$   $\delta_{11} = \alpha_{11} + b > 0$

28

27

$\varepsilon < 0$   64   64   $\varepsilon < 0$

63   13   15   65

FIG_3

FIG_4

FIG_5

FIG_6

FIG_7

FIG_8

0 063 057